(19) Europäisches Patentamt

European Patent Office

Office européen des brevets

(11) **EP 3 679 395 B1**

## (12) FASCICULE DE BREVET EUROPEEN

(45) Date de publication et mention de la délivrance du brevet:
**18.10.2023 Bulletin 2023/42**

(21) Numéro de dépôt: **18762104.0**

(22) Date de dépôt: **06.09.2018**

(51) Classification Internationale des Brevets (IPC):
**G01S 17/18** (2020.01)      **G01S 7/484** (2006.01)
**G01S 7/481** (2006.01)      **G01S 17/10** (2020.01)

(52) Classification Coopérative des Brevets (CPC):
**G01S 7/484; G01S 7/4818; G01S 17/10; G01S 17/18**

(86) Numéro de dépôt international:
**PCT/EP2018/073952**

(87) Numéro de publication internationale:
**WO 2019/048523 (14.03.2019 Gazette 2019/11)**

(54) **SYSTÈME LIDAR AMÉLIORÉ**

VERBESSERTES LIDAR-SYSTEM

IMPROVED LIDAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2017 FR 1700902**

(43) Date de publication de la demande:
**15.07.2020 Bulletin 2020/29**

(73) Titulaire: **Thales**
**92400 Courbevoie (FR)**

(72) Inventeurs:
• **LALLIER, Eric**
**94230 Cachan (FR)**
• **DEMUR, Romain**
**94250 Gentilly (FR)**
• **GRISARD, Arnaud**
**91767 Palaiseau Cedex (FR)**

• **MORVAN, Loïc**
**91767 Palaiseau Cedex (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 3 082 203      US-A1- 2015 010 036**
**US-A1- 2016 209 498**

• **HUOT LAURENT ET AL: "Broadband upconversion imaging around 4 [mu]m using an all-fiber supercontinuum source", PROCEEDINGS OPTICAL DIAGNOSTICS OF LIVING CELLS II, SPIE, US, vol. 10088, 20 février 2017 (2017-02-20), pages 100880J-100880J, XP060086431, ISSN: 0277-786X, DOI: 10.1117/12.2251805 ISBN: 978-1-5106-1723-0 cité dans la demande**

## Description

### DOMAINE DE L'INVENTION

L'invention concerne le domaine des systèmes LIDAR pour l'observation de scènes éloignées sous illumination laser. Plus particulièrement l'invention concerne un système LIDAR fonctionnant dans l'infrarouge dont la détection est améliorée.

### ETAT DE LA TECHNIQUE

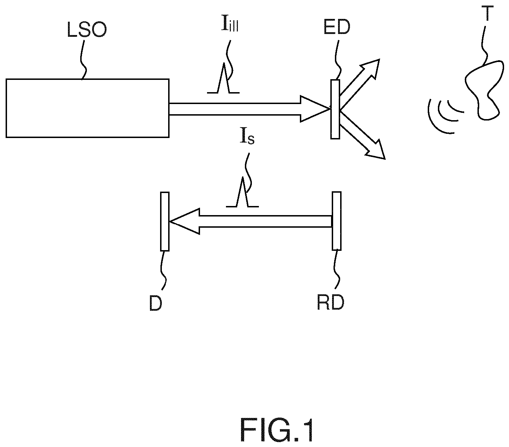

Le principe général d'un LIDAR à détection directe (c'est à dire non cohérent) est bien connu de l'état de la technique et illustré figure 1. Une source laser impulsionnelle d'émission LS0 émet un faisceau lumineux sous la forme d'une impulsion d'illumination $I_{ill}$ qui illumine un volume de l'espace grâce à un dispositif d'émission ED. Un dispositif de réception RD collecte une fraction de l'onde rétrodiffusée par une cible T présente dans le volume illuminé, dénommée impulsion signal, et un détecteur D transforme le signal lumineux détecté en un signal électrique qui est traité pour en extraire une information de distance (télémétrie), de vitesse, de composition (spectroscopie)...

Les pupilles d'émission et de réception peuvent être rassemblées en un seul dispositif d'émission/réception, on parle alors de LIDAR monostatique.

De nombreuses applications de détection LIDAR mettent à profit les propriétés optiques de l'atmosphère dans les fenêtres du proche infrarouge (1,5-2 $\mu$m) et de l'infrarouge (2-12 $\mu$m) qui offrent une transparence importante et des conditions de propagation compatibles avec la sécurité oculaire. D'importantes étapes ont été franchies depuis peu dans le domaine des sources laser en termes de puissance et de longueurs d'onde accessibles, de sorte qu'une large gamme de techniques d'illumination est désormais disponible pour sonder de façon active une zone qui peut être très éloignée de l'observateur. Toutefois, que ce soit pour la détection (télémétrie) ou l'identification de polluants ou d'objets à longue portée, l'analyse des signaux optiques reçus en retour souffre de façon générale de la sensibilité de la voie de réception.

En effet il est bien connu que les performances des détecteurs infrarouges sont très inférieures à celles des détecteurs pour le proche infrarouge, et que ces derniers sont également moins performants que les détecteurs pour le spectre visible. C'est le cas en termes de sensibilité et de bande passante, sans compter la contrainte de fortement refroidir le détecteur pour ce qui concerne le spectre infrarouge. De ce fait il est intéressant de convertir en fréquence le signal reçu, c'est-à-dire d'augmenter sa fréquence (« up-conversion ») pour bénéficier de détecteurs plus sensibles.

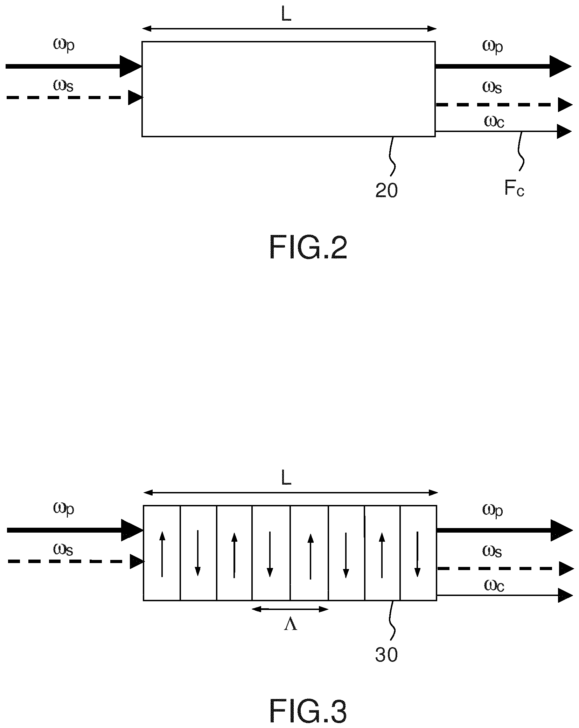

Un convertisseur opérant par sommation de fréquences est illustré figure 2 ; Il utilise un cristal optique non-linéaire 20 possédant une susceptibilité non-linéaire d'ordre 2 et générant, à partir d'un faisceau signal (fréquence $\omega_s$) et d'un faisceau pompe (fréquence $\omega_p$), un faisceau converti (fréquence $\omega_c$) présentant une longueur d'onde diminuée (soit une fréquence augmentée) de sorte que :

$$\omega_s + \omega_p = \omega_c$$

Pour que le processus de conversion soit efficace, ce mécanisme nécessite l'accord de phase entre le faisceau pompe de forte intensité, le faisceau signal à détecter et donc à convertir, et le faisceau converti lors de leur propagation dans le milieu non linéaire, qui s'exprime par la relation ci-dessous entre les vecteurs d'onde respectifs des 3 faisceaux :

$$\overrightarrow{\Delta k} = \vec{k}_c \text{ - } \vec{k}_s \text{ - } \vec{k}_p = \vec{0}$$

Cette condition peut être satisfaite avec certains cristaux non-linéaires biréfringents en jouant sur l'orientation cristallographique et la polarisation des ondes mises en jeu.

Une autre approche consiste à utiliser des matériaux 30 à quasi-accord de phase (QAP) dont le signe du coefficient non linéaire d'ordre 2 $\chi^{(2)}$ est périodiquement alterné (période $\wedge$ selon z), afin de rétablir la bonne relation de phase, tel qu'illustré figure 3. La relation d'accord de phase devient :

$$\overrightarrow{\Delta k} = \vec{0} = \vec{k}_c \text{ - } \vec{k}_s \text{ - } \vec{k}_p \text{ - } \frac{2\pi}{\Lambda}\vec{z}$$

Cette dernière méthode est en général préférable car elle permet d'exploiter au mieux les propriétés non-linéaires du matériau et minimise la puissance de pompe nécessaire à l'obtention d'un bon rendement de conversion.

Parmi les matériaux à QAP usuels on peut distinguer les matériaux ferroélectriques comme le PPLN (Periodically Poled Lithium Niobate) qui couvrent la gamme spectrale allant du visible jusqu'à environ 4 $\mu$m, et les matériaux semi-conducteurs comme l'OP-GaAs (Orientation Patterned Gallium Arsenide) qui permettent de travailler plus loin dans l'infrarouge, par exemple jusqu'à 16 $\mu$m.

On peut par exemple utiliser du PPLN pour convertir un signal à 1,5 $\mu$m à l'aide d'un laser de pompe émettant vers 1 $\mu$m ou 2 $\mu$m. On obtient dans ce cas un signal converti à 0,60 $\mu$m ou 0,86 $\mu$m permettant l'utilisation d'un détecteur Silicium.

On peut utiliser un cristal d'OP-GaAs pour convertir un signal à 8-12 $\mu$m à l'aide d'un laser de pompe à 1,9 $\mu$m vers 1,5-1,6 $\mu$m et utiliser un détecteur InGaAs non refroidi au lieu d'un HgCdTe à 77°K.

De même, on peut utiliser un cristal d'OP-GaP pour convertir un signal de longueur d'onde comprise entre 3 et 10 μm à l'aide d'un laser à 1 μm et utiliser un détecteur Si. Le GaP est en effet transparent jusqu'à 0,6 μm, ce qui n'est pas le cas du GaAs.

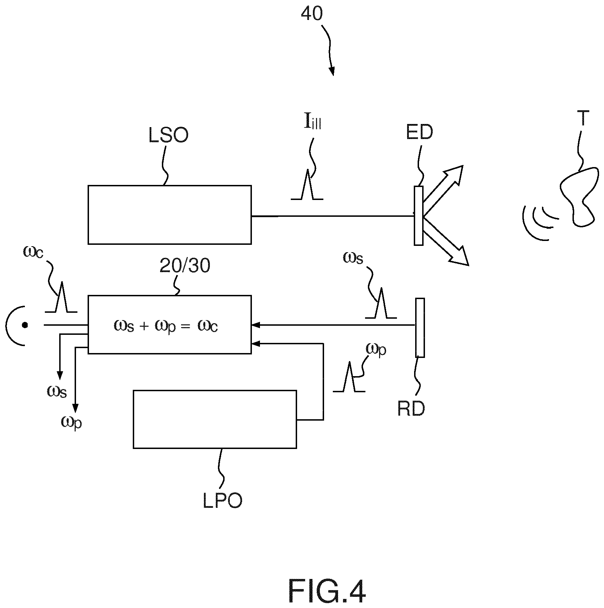

Un LIDAR 40 selon l'état de la technique utilisant un cristal non linéaire pour l'« up conversion », est illustré figure 4. Ce LIDAR nécessite deux sources laser, une source laser pour l'émission LS0 et une source laser de pompage LP0 sur la voie de réception qui fournit le signal de pompe.

Une limitation importante associée à ce principe de détecteur par « up-conversion » est la nécessité de disposer d'une source de pompage puissante pour obtenir un bon rendement de conversion, une condition nécessaire pour que cette approche soit avantageuse par rapport à une détection directe.

Le document US2016/0209498 décrit un système de mesure d'un décalage temporel d'un signal optique réfléchi par un objet. Dans une variante le système utilise une source DFB pour éclairer l'objet et de l' «up conversion» à la réception, avec une <u>source laser additionnelle</u> pour pomper le cristal non linéaire.

En dépit des avantages apportés par les matériaux à quasi-accord de phase pour la conversion de fréquence, la puissance de pompe requise pour obtenir un bon rendement de conversion reste importante.

Par exemple, la puissance de pompe nécessaire à 1,0 μm pour convertir de façon significative un signal à 1,5 μm dans le visible à 0,6 μm à l'aide d'un cristal de PPLN de quelques centimètres est de plusieurs dizaines à quelques centaines de Watts. La nécessité de disposer d'un laser spécifique et de forte puissance pour la réalisation du détecteur limite en pratique l'intérêt de cette approche, sachant que l'illumination de l'objet lointain à détecter suppose déjà de disposer d'un émetteur laser générant des impulsions courtes et de forte puissance crête.

Il est possible de diminuer la puissance de pompe requise en insérant par exemple le cristal convertisseur de fréquence dans la cavité du laser de pompe. On bénéficie ainsi de l'effet de surtension de la cavité laser. Cette option n'élimine cependant pas la nécessité d'un deuxième laser pour le LIDAR.

On peut aussi diminuer la puissance de pompe nécessaire en utilisant un cristal convertisseur de fréquence en configuration guidée monomode. Le confinement de l'énergie et l'absence de diffraction en propagation guidée permettent de garantir une forte densité de puissance de pompe sur toute la longueur d'interaction. Dans ce cas on peut fortement diminuer la puissance nécessaire, par exemple à ~0,1 W, au prix d'une étape technologique supplémentaire (la fabrication du guide d'onde), mais un laser de pompe spécifique est toujours nécessaire. De plus, il est connu que le front d'onde rétrodiffusé par une cible lointaine n'est généralement pas monomode et n'est donc pas adapté à un couplage dans un guide monomode.

Sachant qu'on doit disposer d'un laser pour l'émission des impulsions, une autre possibilité est d'utiliser un même laser de pompage servant à la fois à l'émission des impulsions en direction de l'objet à détecter et à la conversion en fréquence des impulsions rétrodiffusées par cet objet. Ce concept a été mis en oeuvre pour la détection à courte distance dans la référence Huot, L.; Moselund, P. M.; Tidemand-Lichtenberg, P.; Leick, L. & Pedersen, C. "Upconversion imaging using an all-fiber supercontinuum source" Optics Letters, 2016, 41, 2466-2469.

Dans cette expérience le faisceau d'un laser à fibre de pompe émettant des impulsions de 3,5 ns à 1,55 μm est séparé en deux parties. Une partie sert à générer un super continuum spectral compris entre 2,0 et 2,6 μm à l'aide d'une fibre non-linéaire, et l'autre partie sert à convertir en fréquence vers 0,8-0,9 μm les impulsions du supercontinuum rétrodiffusées par la cible pour être visualisées sur une caméra CCD en Silicium. Dans ce cas, c'est la même impulsion qui est utilisée pour les deux fonctions émission et réception et le principe est nécessairement limité à la détection ou l'imagerie d'objets à courtes distances. L'utilisation d'une impulsion ultérieure du train d'impulsions pour réaliser la fonction de détection supposerait que l'on connaisse précisément la distance de l'objet, or c'est par exemple ce que l'on cherche à mesurer en télémétrie. Pour la détection ou l'imagerie d'objets lointains, les auteurs suggèrent en fait l'utilisation de deux lasers indépendants synchronisés, ce qui ramène à la problématique de disposer d'un laser supplémentaire pour la conversion.

Un but de la présente invention est de remédier aux inconvénients précités en proposant un système LIDAR utilisant une source unique pour l'émission et la pompe de l'« up conversion » compatible de la détection de cibles à grande distance.

## DESCRIPTION DE L'INVENTION

La présente invention a pour objet un système LIDAR configuré pour illuminer une cible avec une impulsion d'illumination et pour récupérer une impulsion signal issue d'une réflexion de l'impulsion d'illumination sur la cible, les impulsions d'illumination et signal présentant une même fréquence signal, le système LIDAR comprenant :

- une source laser unique configurée pour générer un signal d'émission-détection avec une fréquence de répétition f, ledit signal d'émission-détection comprenant une première impulsion destinée à générer l'impulsion d'illumination et présentant une première fréquence puis une deuxième impulsion séparée temporellement de la première impulsion d'un temps de séparation et présentant une deuxième fréquence,
- un premier dispositif de conversion de fréquence configuré pour générer une impulsion convertie à partir de l'impulsion signal et de la deuxième impulsion par un procédé non linéaire de sommation de fréquence, l'impulsion convertie présentant une fréquence convertie égale à la somme de la fréquence signal et de la deuxième fréquence.

Préférentiellement la première impulsion présente une première durée et la deuxième impulsion présente une deuxième durée supérieure à la première durée, et dans lequel le temps de séparation est déterminé à partir d'une distance minimale de détection de la cible souhaitée et la deuxième durée est déterminée à partir d'une distance maximale de détection de la cible souhaitée.

Préférentiellement le premier dispositif de conversion de fréquence comprend un premier cristal non linéaire.

Selon un mode de réalisation le premier cristal non linéaire est disposé dans une cavité résonnant à la deuxième fréquence.

Selon une première variante la source laser est configurée pour que la première fréquence et la deuxième fréquence présentent une même valeur dénommée fréquence de pompe,

le système LIDAR comprenant en outre un deuxième dispositif de conversion de fréquence configuré pour générer l'impulsion d'illumination à la fréquence signal à partir de la première impulsion à la fréquence de pompe par un procédé non linéaire de soustraction de fréquence, la fréquence signal obtenue étant égale à la fréquence de pompe moins une fréquence intermédiaire.

Préférentiellement le deuxième dispositif de conversion de fréquence comprend un deuxième cristal non linéaire.

Selon un mode de réalisation le deuxième dispositif de conversion de fréquence comprend en outre une diode laser signal configurée pour illuminer le deuxième cristal non linéaire avec un faisceau présentant la fréquence signal de sorte que ce faisceau soit amplifié dans le premier cristal non linéaire au fur et à mesure de sa propagation.

Selon un mode de réalisation le deuxième cristal non linéaire est disposé dans une cavité résonnant à la fréquence signal et/ou à la fréquence intermédiaire et forme un oscillateur paramétrique.

Selon une deuxième variante la source laser est configurée pour que la première fréquence et la deuxième fréquence présentent une valeur différente, et dans lequel la fréquence signal est égale à la première fréquence.

Selon un premier mode de réalisation la source laser et le premier dispositif de conversion de fréquence sont deux éléments distincts, le système LIDAR comprenant en outre un séparateur configuré pour séparer spatialement la première impulsion de la deuxième impulsion, afin que la deuxième impulsion puisse être injectée dans le premier dispositif de conversion de fréquence.

Par exemple la source laser est un système comprenant un oscillateur et au moins un amplificateur à fibre.

Selon un mode de mise en oeuvre au moins l'oscillateur comprend au moins une diode laser configurée pour réaliser un profil temporel de la première et/ou de la deuxième impulsion par modulation directe du courant injecté dans ladite diode laser.

Selon un deuxième mode de réalisation la source laser est un laser en anneau présentant une cavité laser et comprenant une cellule électro-optique pour moduler l'intensité à l'intérieur de la cavité laser, et dans lequel le premier cristal non-linéaire est disposé dans la cavité laser dudit laser en anneau.

Selon un mode de réalisation ladite cellule est en outre configurée de sorte que la première impulsion et la deuxième impulsion présentent deux polarisations orthogonales, un miroir de la cavité laser étant un séparateur de polarisation configuré pour transmettre la polarisation correspondant à la première impulsion, permettant l'extraction de ladite première impulsion de la cavité laser.

Selon un autre aspect l'invention concerne un procédé de détection d'une cible de type LIDAR comprenant les étapes consistant à :

- générer périodiquement à partir d'une source laser unique, un signal d'émission-détection, le signal d'émission-détection comprenant une première impulsion présentant une première fréquence puis une deuxième impulsion présentant une deuxième fréquence et étant séparée de la première impulsion d'un temps de séparation et,
- illuminer une cible avec une impulsion d'illumination obtenue à partir de la première impulsion,
- recevoir une impulsion signal issue d'une réflexion de l'impulsion d'illumination sur la cible, les impulsions d'illumination et signal présentant une même fréquence signal,
- générer une impulsion convertie à partir de l'impulsion signal et de la deuxième impulsion par un procédé non linéaire de sommation de fréquence, l'impulsion convertie présentant une fréquence convertie égale à la somme de la fréquence signal et de la deuxième fréquence,
- détecter l'impulsion convertie.

Selon un mode de réalisation la première fréquence et la deuxième fréquence présentent une même valeur dénommée fréquence de pompe, le procédé comprenant en outre une étape consistant à générer l'impulsion d'illumination à la fréquence signal à partir de la première impulsion par un procédé non linéaire de conversion de fréquence, la fréquence signal obtenue étant égale à la fréquence de pompe moins une fréquence intermédiaire.

Selon un mode de réalisation l'étape de génération du signal d'émissiondétection et l'étape de génération de l'impulsion convertie sont réalisées par une même source laser présentant une cavité laser en anneau,

l'étape de génération du signal d'émission-détection s'effectuant avec une cellule électro-optique modulant l'intensité à l'intérieur de la cavité et l'étape de génération de l'impulsion convertie s'effectuant dans la cavité laser avec un cristal non linéaire disposé intracavité,

et dans lequel l'étape de génération du signal d'émission-détection comprend les sous étapes consistant à :

- stocker de l'énergie dans la cavité, la cellule électro-optique étant configurée pour empêcher le laser de laser,
- générer et extraire de la cavité la première impulsion, la cellule électro-optique étant configurée pour que le laser fonctionne en mode déclenché,
- générer la deuxième impulsion, la cellule électro-optique étant configurée pour que le laser fonctionne en mode continu ou quasi-continu pendant la durée souhaitée de la deuxième impulsion,
- reboucler à l'étape de stockage, de manière à entamer un nouveau cycle de génération du signal d'émission.

Selon une variante le procédé selon l'invention comprend en outre, entre l'étape de génération et d'extraction de la première impulsion et l'étape de génération de la deuxième impulsion, une étape consistant à empêcher le laser de fonctionner pendant un temps correspondant au temps de séparation.

Par exemple l'étape de génération et d'extraction de la première impulsion s'effectue à l'aide d'un séparateur de polarisation constituant un des miroirs de la cavité laser, ladite étape comprenant une première sous étape de génération de l'impulsion I1 intracavité et une deuxième sous étape d'extraction de l'impulsion I1.

Selon un mode de mise en oeuvre l'étape de génération du signal d'émission réception consiste à générer périodiquement un ensemble de N signaux d'émission réception dont le temps de séparation varie de manière incrémentale d'un signal d'émission réception au suivant.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée décrit le principe général d'un LIDAR à détection directe (c'est à dire non cohérent).
La figure 2 déjà citée illustre un convertisseur opérant par sommation de fréquences à base d'un cristal optique non-linéaire « bulk ».
La figure 3 déjà citée illustre un convertisseur opérant par sommation de fréquences à base d'un cristal optique non-linéaire de type QAP.
La figure 4 déjà citée illustre un LIDAR selon l'état de la technique utilisant un cristal non linéaire pour l'« up conversion ».
La figure 5 illustre un système LIDAR selon l'invention.
La figure 6 illustre un exemple de signal d'émission détection Sed selon l'invention.
La figure 7 illustre une première variante du système LIDAR selon l'invention dans laquelle la source laser LS est configurée pour que les première et deuxième fréquences $\omega_{p1}$ et $\omega_{p2}$ présentent une même valeur dénommée fréquence de pompe $\omega_p$.
La figure 8 illustre un deuxième dispositif de conversion comprenant une diode laser.
La figure 9 illustre une deuxième variante du système LIDAR selon l'invention dans laquelle la source laser est configurée pour que la première fréquence $\omega p_1$ et la deuxième fréquence $\omega_{p2}$ présentent une valeur différente.
La figure 10 illustre un premier mode de réalisation, compatible de la première et de la deuxième variante dans lequel la source laser LS et le premier dispositif de conversion de fréquence FC-up sont deux éléments distincts.
La figure 11 illustre la première variante avec une source laser comprenant un oscillateur, typiquement une diode laser, et au moins un amplificateur à fibre.
La figure 12 illustre le principe de pré-compensation du profil temporel de l'impulsion issue de la diode laser de départ. La figure 12a illustre l'effet de distorsion de l'amplificateur A sur la forme temporelle de l'impulsion initiale délivrée par l'oscillateur. La figure 12b illustre la pré-compensation temporelle de l'impulsion initiale, pour tenir compte de la présence de l'amplificateur.
La figure 13 donne un exemple du montage optique d'un système lidar selon l'invention implémentant la première variante combinée au premier mode de réalisation.
La figure 14 illustre une source laser LS comprenant un oscillateur constitué de deux diodes laser DL1, DL2 et d'au moins un amplificateur à fibre.
La figure 15 illustre un deuxième mode de réalisation du système LIDAR selon l'invention, également compatible de la première et de la deuxième variante, dans lequel la source laser est un laser en anneau.
La figure 16 illustre un exemple du LIDAR selon l'invention selon ce mode de réalisation les deux impulsions présentant une même fréquence.
La figure 17 illustre un exemple du LIDAR selon l'invention selon ce mode de réalisation les deux impulsions présentant des fréquences différentes.
La figure 18 illustre un procédé de détection d'une cible de type LIDAR selon l'invention.
La figure 19 illustre une variante du procédé selon l'invention
La figure 20 illustre un mode de mise en oeuvre du procédé selon l'invention dans lequel l'étape de génération du signal Sed d'émission-détection s'effectue avec une cellule électro-optique IM qui module l'intensité à l'intérieur de la cavité en ajustant le niveau des pertes, permettant au laser de fonctionner selon des modes différents.

La figure 21 illustre une option d'implémentation du mode de mise en oeuvre de la figure 20

La figure 22 illustre un ensemble de signaux d'émission détection selon un mode de réalisation du procédé selon l'invention permettant de réaliser un balayage fin de l'espace entre une distance minimum et une distance maximum.

## DESCRIPTION DETAILLEE DE L'INVENTION

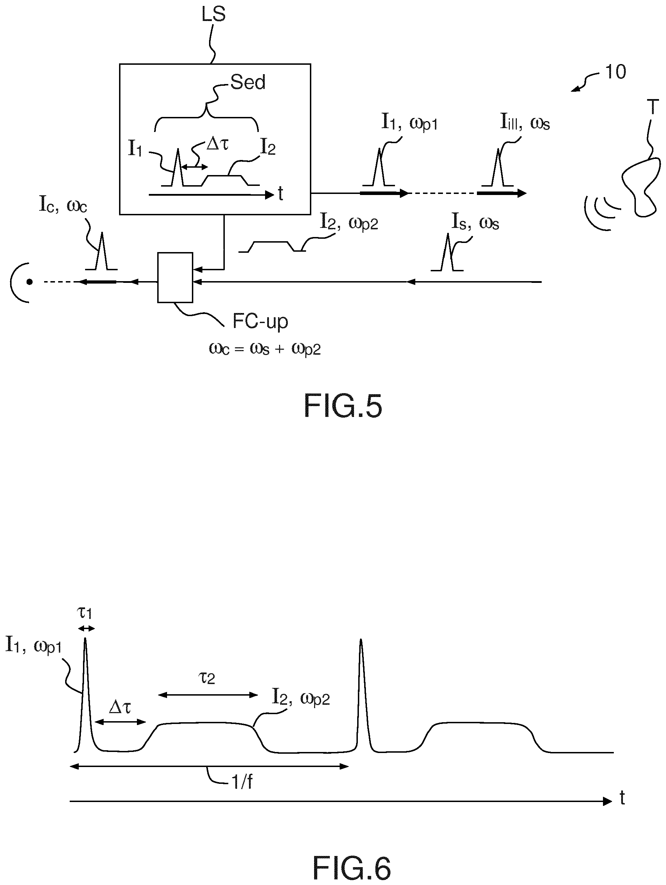

Un système LIDAR 10 selon l'invention est illustré figure 5. Le système 10 est classiquement configuré pour illuminer une cible T avec une impulsion d'illumination $I_{ill}$ et pour récupérer une impulsion signal Is issue d'une réflexion/rétrodiffusion de l'impulsion d'illumination sur la cible. L'impulsion signal Is présente une fréquence signal $\omega_s$, égale à la fréquence de l'impulsion d'illumination $I_{ill}$.

Le système LIDAR 10 comprend une source laser LS configurée pour générer un signal d'émission-détection Sed avec une fréquence (ou cadence) de répétition *f*.

Le signal Sed comprend une première impulsion I1 destinée à générer l'impulsion d'illumination présentant une première fréquence $\omega_{p1}$, puis une deuxième impulsion I2 séparée temporellement de la première impulsion d'un temps de séparation $\Delta\tau$ et présentant une deuxième fréquence $\omega_{p2}$.

La première impulsion I1 à partir de laquelle est générée l'impulsion d'illumination, présente une première durée $\tau1$ durée courte, la résolution spatiale du LIDAR dépendant de sa largeur temporelle. L'impulsion I1 conditionne la durée de l'impulsion d'illumination et donc de l'impulsion signal qui est détectée, $\tau1$ est donc choisi pour garantir une bonne résolution en distance tout en restant compatible avec la bande passante des détecteurs visibles et infrarouge.

Compte tenu des sources laser et des détecteurs actuels, la première durée $\tau1$ est typiquement comprise entre 0.1 ns et 100 ns.

Le LIDAR 10 comprend en outre un premier dispositif de conversion de fréquence FC-up configuré pour générer une impulsion convertie Ic à partir de l'impulsion signal Is et de la deuxième impulsion I2 par un procédé non linéaire de sommation de fréquence : l'impulsion convertie présente une fréquence convertie $\omega_c$ égale à la somme de la fréquence signal $\omega_s$ et de la deuxième fréquence $\omega_{p2}$.

$$\omega_s + \omega_{p2} = \omega_c$$

Selon une variante préférée le premier dispositif de conversion de fréquence FC-up comprend un premier cristal non linéaire NLCu, typiquement tel que décrit sur les figures 2 ou 3.

Dans le LIDAR 10 selon l'invention c'est la même source laser LS qui génère l'impulsion utilisée pour l'émission I1 et l'impulsion utilisée pour l'UP conversion I2 par le biais du signal Sed, de façon répétitive.

L'impulsion I2 est dirigée et injectée dans le dispositif FC-up selon différentes variantes décrites plus loin.

Contrairement à la référence précitée dans l'état de la technique, ce n'est pas ici la même impulsion qui est utilisée pour les deux fonctions, mais deux impulsions différentes d'un même signal temporel Sed délivré par la source laser LS.

La fréquence de répétition f du signal dépend de la portée recherchée puisqu'on ne souhaite pas envoyer un nouveau doublet d'impulsions avant d'avoir reçu le précédent. Donc c'est $\Delta\tau + \tau2$ qui fixe la fréquence haute. Par exemple si on veut aller jusqu'à 100 km, on aura par exemple une fréquence maximum de l'ordre de 1 kHz (660 $\mu$s + le temps de recharge le laser avant le nouveau doublet). Si on veut 10 km on peut aller jusqu'à 10 kHz, etc.

Typiquement la fréquence de répétition f est comprise entre quelques Hz à quelques kHz suivant la portée recherchée.

Pour un fonctionnement optimal du LIDAR la durée $\tau2$ de la deuxième impulsion est relativement longue comparée à $\tau1$, soit $\tau2$ supérieure à $\tau1$. Le temps de séparation $\Delta\tau$ est déterminé à partir de la distance minimale dmin de détection de la cible souhaitée et la deuxième durée $\tau2$ est déterminée à partir de la distance maximale dmax de détection de la cible souhaitée. Un exemple de signal Sed est illustré figure 6.

Plus particulièrement le délai $\Delta\tau$ entre les deux impulsions I1 et I2 correspond à un AR de la lumière illuminant la cible à la plus petite distance dmin que l'on cherche à sonder et peut être calculé comme :

$$\Delta\tau = 2.\text{dmin}/C$$

C vitesse de la lumière

Le délai $\Delta\tau+\tau2$ correspond à un AR de la lumière illuminant la cible à la plus grande distance dmax que l'on cherche à sonder et peut être calculé comme :

$$\Delta\tau+\tau2 = 2.\text{dmax}/C$$

C vitesse de la lumière

Si on veut par exemple couvrir une distance allant de 1 km à 100 km de la source LS, la deuxième impulsion I2 est générée 6,6 $\mu$s après la première et a une durée de 653,4 $\mu$s.

Le LIDAR 10 selon l'invention est indépendant du montage pour l'émission/réception : il est compatible d'un montage mono-statique (émission et réception du

signal à $\omega_s$ par la même pupille de sortie) ou bistatique (émission et détection du signal par deux pupilles différentes).

Ainsi le LIDAR 10 selon l'invention détecte des objets le cas échéant à grande distance en utilisant une même source laser de pompage pour générer le signal à l'émission et le convertir à la réception. Cette source laser émet des impulsions successives de durées différentes adaptées respectivement à l'émission et la réception. L'up conversion du signal retour permet l'utilisation d'un détecteur de plus grande détectivité ou bande passante.

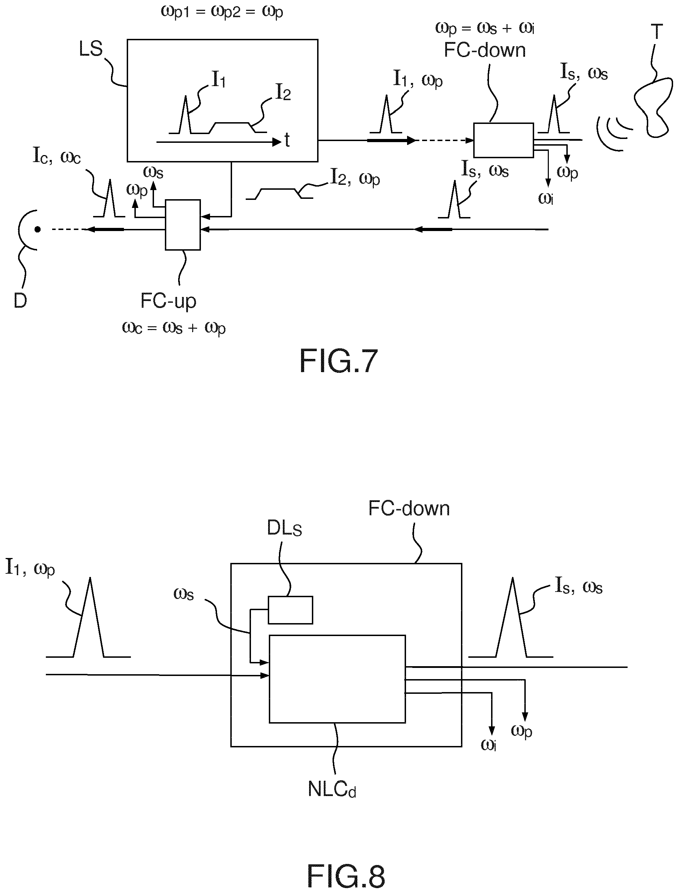

Selon une première variante du système LIDAR 10 selon l'invention illustré figure 7 la source laser LS est configurée pour que les première et deuxième fréquences $\omega_{p1}$ et $\omega_{p2}$ présentent une même valeur dénommée fréquence de pompe $\omega_p$.

Dans ce cas où les impulsions I1 et I2 ont une fréquence identique, il convient de modifier la fréquence de l'impulsion d'illumination/signal.

En effet lors de l'up conversion, le cristal NLCu réglé pour doubler la fréquence $\omega_p$ doublera indistinctement la fréquence signal à $\omega_p$ et la deuxième impulsion également de fréquence $\omega_p$ on ne saura pas séparer à la sortie le signal Is d'intérêt du signal I2 de même fréquence.

Le système LIDAR selon cette première variante comprend donc en outre un deuxième dispositif de conversion de fréquence FC-down configuré pour générer une impulsion utilisée comme impulsion d'illumination $I_{ill}$ à la fréquence signal $\omega_s$, à partir de la première impulsion I1 à la fréquence de pompe $\omega_p$ par un procédé non linéaire de soustraction de fréquence. La fréquence signal est modifiée par rapport à $\omega_p$.

Ce procédé fait intervenir une fréquence intermédiaire $\omega_i$ de sorte que :

$$\omega_s + \omega_i = \omega_p$$

La fréquence signal $\omega_s$ obtenue est égale à la fréquence de pompe $\omega_p$ moins la fréquence intermédiaire $\omega_i$. L'impulsion courte I1 de fréquence de pompe est convertie en une fréquence plus faible pour former le signal émis en direction de l'objet à détecter. Ce procédé est dénommé « down conversion ».

Préférentiellement le deuxième dispositif de conversion de fréquence FC-down comprend un deuxième cristal non linéaire NLCd tel que décrit figure 2 ou 3.

Selon un mode de réalisation le cristal NLCd est disposé dans une cavité résonnant à la fréquence signal $\omega_s$ et/ou à la fréquence intermédiaire $\omega_i$. Ce type de système est dénommé oscillateur paramétrique ou OPO pour « optical parametric oscillator ».

Selon un autre mode de réalisation compatible avec le mode de réalisation précédent, le deuxième dispositif de conversion illustré figure 8 comprend en outre une diode laser signal DLs configurée pour illuminer le deuxième cristal non linéaire NLCd avec un faisceau présentant la fréquence signal $\omega_s$, de sorte que ce faisceau soit amplifié dans le deuxième cristal non linéaire NLCd au fur et à mesure de sa propagation. Ce type de système est dénommé amplificateur paramétrique ou OPA pour « optical parametric amplifier ». Le gain paramétrique des matériaux à QAP peut être très élevé lorsque la puissance crête de pompe est importante (> 60 dB) et permet d'obtenir un bon rendement de conversion de $\omega_p$ vers $\omega_s$.

Un exemple compatible des sources lasers et dispositifs convertisseurs de fréquence actuellement disponibles est une fréquence de pompe correspondant à une longueur sensiblement égale à 1 $\mu$m, une fréquence signal $\omega_s$ correspondant à une longueur d'onde sensiblement égale à 1.5 $\mu$m et une fréquence convertie correspondant une longueur d'onde sensiblement égale à 0.6 $\mu$m.

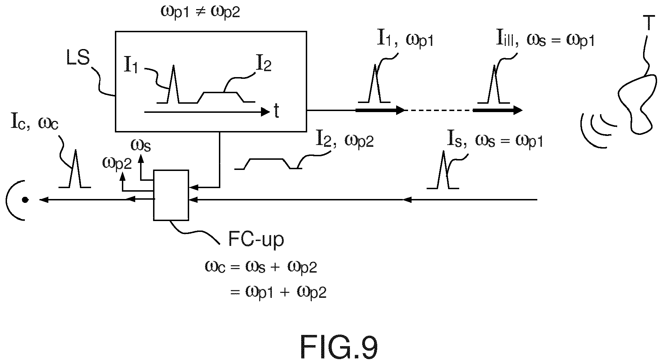

Selon une deuxième variante illustrée figure 9 la source laser LS est configurée pour que la première fréquence $\omega_{p1}$ et la deuxième fréquence $\omega_{p2}$ présentent une valeur différente. Dans ce cas il n'y a pas lieu de modifier la première fréquence avant d'illuminer la cible. La première impulsion I1 est alors utilisée directement pour illuminer la cible (I1=$I_{ill}$) et la fréquence signal $\omega_s$ est égale à la première fréquence $\omega_{p1}$.

Un exemple compatible des sources lasers et d'un dispositif d'up conversion de fréquence actuellement disponibles est une première fréquence correspondant à une longueur $\lambda_{p1}$=1,53 $\mu$m pour l'émission et une deuxième fréquence correspondant à $\lambda_{p2}$=1,60 $\mu$m pour le pompage de l'étage de détection. Cet écart est suffisant pour séparer le signal converti à 0,782 $\mu$m du doublage de fréquence parasite de la pompe à $\lambda_{p2}$/2=0,8 $\mu$m.

Ces deux longueurs d'ondes de pompe $\lambda_{p1}$ et $\lambda_{p2}$ sont compatibles par exemple d'un amplificateur à fibre dopé erbium dont la bande de gain est comprise entre 1,53 et 1,61 $\mu$m typiquement. On peut partir de 2 diodes laser émettant chacune une longueur d'onde ou d'une seule diode laser accordable en longueur d'onde, la ou les diodes laser peuvent donc être amplifiées avec le même amplificateur.

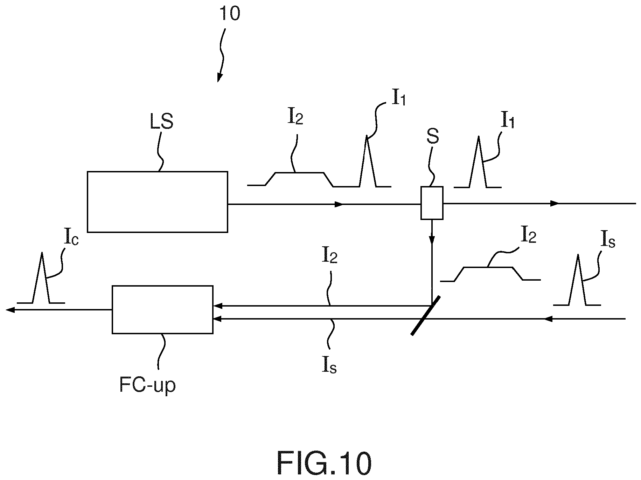

Selon un premier mode de réalisation, compatible des première et deuxième variantes décrites ci-dessus, la source laser LS et le premier dispositif de conversion de fréquence FC-up sont deux éléments distincts, tel qu'illustré figure 10. Le système LIDAR comprenant alors un séparateur S configuré pour séparer spatialement la première impulsion I1 de la deuxième impulsion I2, afin que la deuxième impulsion puisse être injectée dans le premier dispositif de conversion de fréquence FC-up.

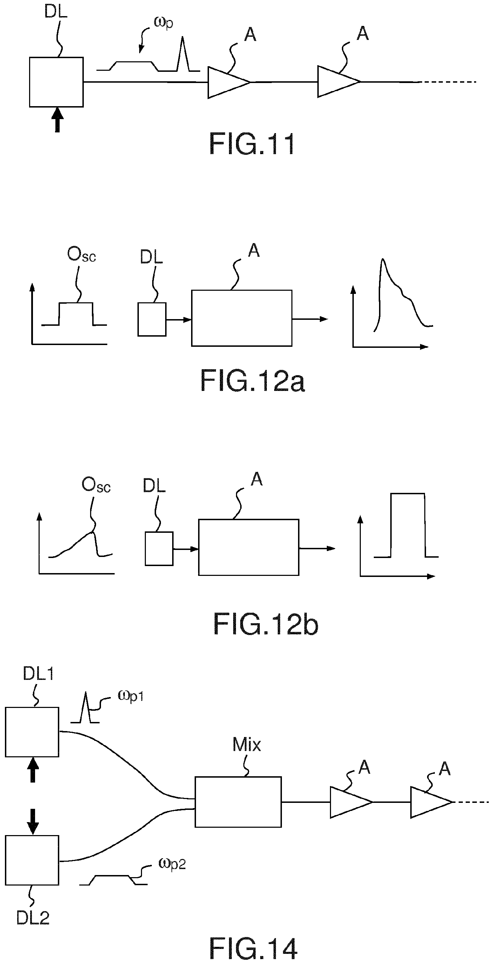

Dans ce cas avantageusement pour la première variante (I1 et I2 présentant une même fréquence de pompe $\omega_p$) la source laser LS est un système comprenant un oscillateur, typiquement une diode laser DL, et au moins un amplificateur à fibre A, tel qu'illustré figure 11.

De par leur longueur et le fort confinement de l'énergie, les amplificateurs à fibre permettent d'obtenir un gain significatif en simple passage. En mettant en cascade plusieurs amplificateurs à fibres, il est par exemple possible d'amplifier des impulsions ns de 0,1 W crête issues d'une diode laser monomode jusqu'à 10-100 kW crête. Ces performances peuvent être obtenues vers 1 $\mu$m, 1,5 $\mu$m, ou 2 $\mu$m en utilisant des fibres respectivement dopées avec des ions Yb, Er, ou Tm.

L'intérêt de cette configuration oscillateur diode / amplificateurs à fibres est que le profil temporel de la première et de la deuxième impulsion est facilement réalisé par modulation directe du courant injecté dans la diode laser DL.

Cependant la saturation du gain de l'amplificateur peut sévèrement modifier le profil temporel d'une longue impulsion (I2). Mais il est possible de pré-compenser cet effet avec le profil de l'impulsion issue de la diode laser de départ, comme illustré figure 12.

La figure 12a illustre l'effet de distorsion de l'amplificateur A sur la forme temporelle de l'impulsion initiale délivrée par l'oscillateur DL. La figure 12b illustre la pré-compensation temporelle de l'impulsion initiale, pour tenir compte de la présence de l'amplificateur.

La configuration oscillateur DL/amplificateur fibré est donc intéressante pour la génération d'un doublet d'impulsions avec des caractéristiques temporelles très différentes. L'amplification de la première impulsion I1 va dépleter l'inversion de population dans la fibre amplificatrice. Le taux d'inversion et donc le gain disponible pour la deuxième impulsion dépendra du délai $\Delta\tau$ entre la première impulsion et le début de la deuxième impulsion. Le temps de pompage nécessaire pour saturer l'inversion de population est inférieur à la durée de vie du niveau laser excité. En réalité, et c'est particulièrement vrai pour les fibres compte tenu du confinement de l'énergie, ce temps peut être fortement réduit lorsque l'intensité de pompage excède l'intensité de saturation de l'absorption. Par exemple, pour l'ion Yb, le temps de vie vaut environ 800 $\mu$s, mais le temps nécessaire pour obtenir une inversion de population maximum peut être diminué d'un facteur supérieur à 10 avec une puissance de pompage typique de quelques dizaines de Watts. L'énergie extractible sera néanmoins diminuée lorsqu'on cherche à observer une région de l'espace proche (~km) avec une deuxième impulsion séparée d'une dizaine de $\mu$s de la première, et elle sera maximale si on souhaite par contre sonder une région éloignée correspondant à un délai $\Delta\tau > 100$ $\mu$s. Cependant, on notera que le signal rétrodiffusé est d'autant plus faible que la distance d est grande (~$d^{-4}$ lorsque l'éclairement est plus grand que la cible) et qu'une puissance disponible plus importante pour les grandes distances tendra donc à minimiser la dynamique requise pour le détecteur.

La technologie actuelle des lasers à fibre est compatible d'un système émettant à 1 $\mu$m (Yb), 1,5 $\mu$m (Er), ou 2 $\mu$m (Tm) avec 600 $\mu$J/6 ns pour la première impulsion I1 , soit 100 kW crête, et jusqu'à quelques dizaines de Watts crête pour la deuxième impulsion I2.

La séparation spatiale des deux impulsions I1 et I2 peut être réalisée de différentes manières.

Selon une première option le séparateur S est un modulateur acoustooptique qui défléchit la deuxième impulsion.

Selon une deuxième option la source laser LS est un système à fibres à maintien de polarisation, et le séparateur S est constitué d'un modulateur électro-optique qui tourne de 90° la polarisation d'une impulsion par rapport à l'autre, et d'un cube polariseur en sortie.

Une troisième option est d'utiliser deux diodes laser émettant sur des polarisations orthogonales pour chacune des impulsions du doublet constituant Sed, avec un système amplificateur à maintien de polarisation (on utilise les axes lents et rapides des fibres) et de disposer un cube polariseur en sortie.

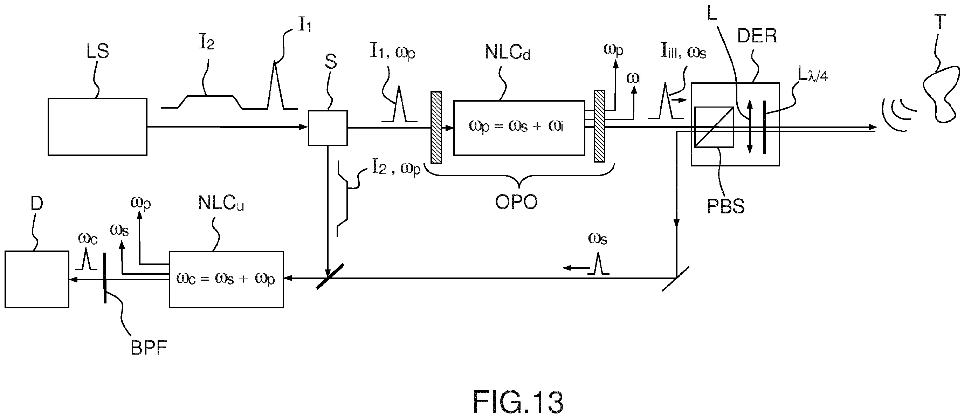

La figure 13 donne un exemple du montage optique d'un système lidar 10 selon l'invention, implémentant la première variante combinée au premier mode de réalisation (I1 et I2 de même fréquence, source LS et dispositif FC-up distincts), dans le cas d'un montage mono-statique (l'émission, et la réception du signal à $\omega_s$ se fait par la même pupille de sortie). Un montage bistatique est aussi possible.

La première impulsion I1 du signal Sed émis par la source laser LS à la fréquence $\omega_p$, est focalisée dans un deuxième cristal non linéaire NLCd à quasi-accord de phase QAP dont la période $\Lambda_{down}$ est adaptée à la génération d'un signal de fréquence inférieure $\omega_s$. Ce convertisseur de fréquence est ici un oscillateur paramétrique ou OPO dans lequel le cristal est alors inséré dans une cavité résonante à $\omega_s$. L'impulsion générée $I_{ill}$ à $\omega_s$ est ensuite dirigée vers la cible à l'aide d'un dispositif d'émission réception DER comprenant une optique adaptée.

La séparation des signaux émis et reçus à $\omega_s$ se fait simplement et classiquement à l'aide d'une lame quart d'onde $L_{\lambda/4}$ et d'un polariseur PBS (le signal émis à $\omega_s$ est polarisé de façon rectiligne).

La deuxième impulsion I2 du doublet périodique à $\omega_p$ et le signal Is à $\omega_s$ rétrodiffusé par la cible sont alignés et focalisés dans le premier cristal à QAP NLCu dont la période $\Lambda_{up}$ est adaptée à la sommation de fréquence $\omega_c = \omega_p + \omega_s$. Le signal à $\omega_c$ est ensuite extrait, filtré (filtre BPF), et focalisé sur le détecteur D. Les détecteurs utilisés peuvent être des mono-détecteurs (APD, compteurs de photons, ...) ou des caméras (CCD, CMOS...).

Pour la deuxième variante combinée au premier mode de réalisation (I1 et I2 présentant deux fréquences différentes $w_{p1}$ et $w_{p2}$), avantageusement la source laser LS est un système comprenant un oscillateur constitué de deux diodes laser DL1, DL2 et d'au moins un amplificateur à fibre A, tel qu'illustré figure 14. Les deux diodes laser émettent respectivement selon deux longueurs d'onde distinctes $\lambda_{p1}$ et $\lambda_{p2}$ correspondant respectivement à la première et à la deuxième fréquence, choisies de sorte qu'elles soient contenues dans la bande de gain de l'amplificateur (ion laser correctement choisi). La diode laser DL1 est configurée pour réaliser le profil temporel de la première impulsion I1 et la diode laser DL2 est configurée pour réaliser le profil temporel de la deuxième impulsion I2 par modulation directe du courant injecté. Il est également possible de pré-compenser les signaux issus de DL1 et DL2.

Les faisceaux issus des deux diodes lasers sont injectés dans l'amplificateur à l'aide d'un mixeur Mix.

La séparation spatiale de I1 et I2 à la sortie de LS peut être faite avec un séparateur S sous la forme d'un démultiplexeur de longueur d'onde, tel un réseau de diffraction ou un miroir dichroïque.

Concernant le dispositif d' « upconversion » FC-up, une puissance de pompe du laser LS de quelques dizaines de Watts peut constituer une limitation pour le rendement de l'opération de sommation de fréquence suivant les longueurs d'ondes envisagées, la nature et les dimensions des cristaux non-linéaires. On augmente considérablement le rendement de conversion en insérant le cristal non-linéaire NLCu dans une cavité résonnante à $\omega_p$ .

Suivant le niveau de pertes optiques des cristaux on peut obtenir une augmentation de la puissance intra-cavité d'un facteur 10 à 100. Une condition nécessaire est que la fréquence $\omega_p$ soit accordée sur une des fréquences de résonance de la cavité.

Dans le cas d'une source laser LS de type oscillateur DL/amplificateur fibré, cette condition est simplement réalisée en contrôlant le courant et/ou la température de la diode laser DL au coeur du système de pompage fibré LS. Une telle diode DL doit émettre un spectre suffisamment fin (-< 10 MHz) pour être injectée dans la cavité. Un spectre très fin peut poser problème pour la première impulsion I1 à cause de l'effet de diffusion Brillouin stimulée (SBS). Pour des impulsions I1 de l'ordre de la ns cet effet est considérablement atténué du fait de l'élargissement spectral associé à la modulation et le faible recouvrement temporel (l'onde SBS est contrapropagative). Pour des impulsions I1 plus longues de quelques ns, une solution est d'utiliser deux diodes laser, une multimode de type Fabry-Perot pour la première impulsion I1 et une mono fréquence de type DFB pour la deuxième impulsion I2.

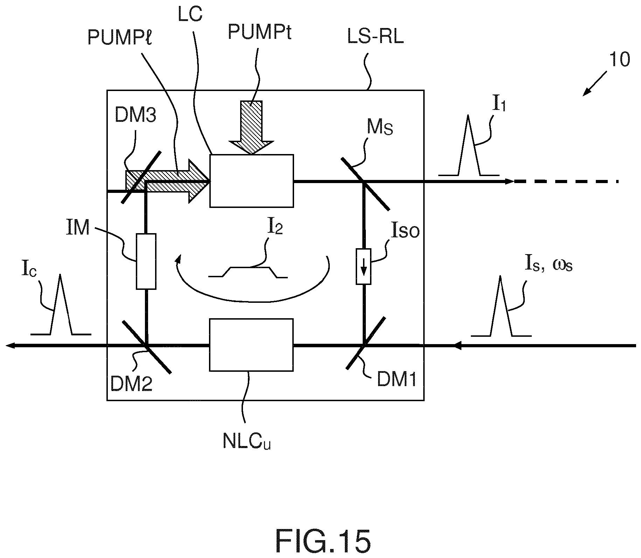

Selon un deuxième mode de réalisation illustré figure 15, également compatible de la première et de la deuxième variante, la source laser LS est un laser en anneau RL dont la cavité laser comprend une cellule électro-optique IM pour moduler l'intensité à l'intérieur de la cavité et dans lequel le premier cristal non-linéaire NLCu est disposé dans la cavité laser.

La cavité laser résonne à la fréquence $\omega_p$, ou aux fréquences proches $\omega_{p1}$ et $\omega_{p2}$.

L'insertion du cristal NLCu dans la cavité permet de bénéficier de l'effet de surtension sans avoir besoin de stabiliser la fréquence de résonance de la cavité à $\omega_p$, contrairement au cas où le cristal est à l'extérieur de la source laser.

On garantit une propagation unidirectionnelle en insérant dans la cavité un isolateur optique ISO ou en injectant un faisceau issu d'une diode laser de faible puissance à $\omega_p$ dans la cavité.

Le laser en anneau RL est en propagation en espace libre et comprend un cristal laser LC pompé soit longitudinalement (faisceau PUMPl) soit transversalement (faisceau PUMPt).

La cellule électro-optique IM module l'intensité à l'intérieur de la cavité laser par modulation des pertes dans la cavité, et est typiquement une cellule de Pockels (lame d'onde variable à commande électrique) associée à un polariseur. La modulation des pertes de la cavité permet de générer des impulsions très brèves (impulsion I1) en mode déclenché intra-cavité, dénommé Q-switch, et de les extraire de la cavité. Il convient pour cela de stocker beaucoup d'énergie dans la cavité en réglant les pertes de manière à bloquer l'effet laser, avant de commuter la cellule pour générer et extraire sur un temps très court une impulsion I1.

L'impulsion I2 est obtenue en faisant laser le laser RL en mode continu pendant la durée τ2 de l'impulsion I2 (toujours en ajustant les pertes à l'aide de la cellule de Pockels)..

Dans un fonctionnement Qswitch simple, la cellule de Pockels comprend un polariseur intracavité et l'impulsion I1 est extraite à l'aide du miroir de séparation MS, qui par exemple est configuré pour transmettre 30% de la lumière à la fréquence $\omega_p$ (ou $\omega_{p1}$ le cas échéant). Les autres miroirs (DM1, DM2, DM3) sont des miroirs dichroïques adaptés à réfléchir et transmettre les longueurs d'onde appropriées. Par exemple DM3 transmet la fréquence signal qui est injectée dans NLCu et DM2 transmet la fréquence convertie. DM1, DM2 et DM3 sont également configurés pour réfléchir l'intégralité du faisceau à la fréquence $\omega_p$. Dans ce cas, une partie de l'impulsion I2 circulant intracavité est transmise par le mirroir MS. On a donc un effet de surtension limité.

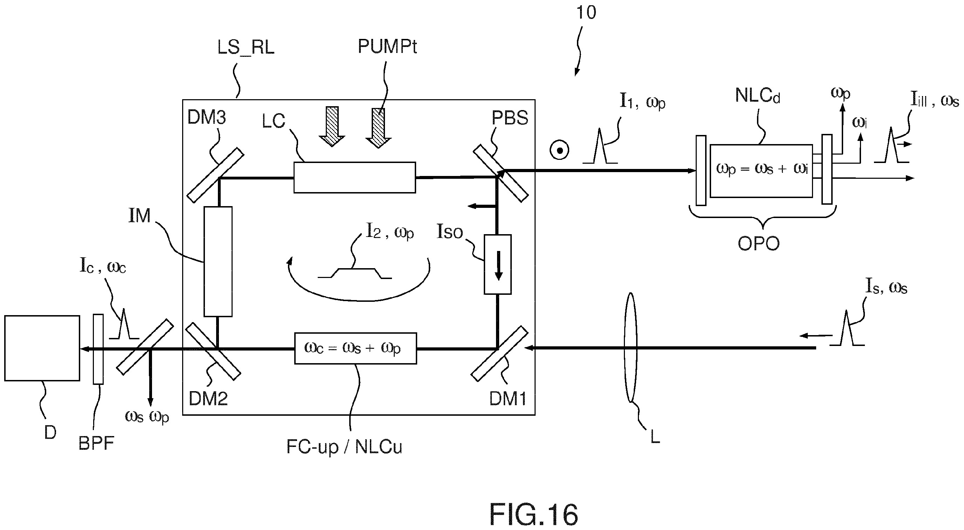

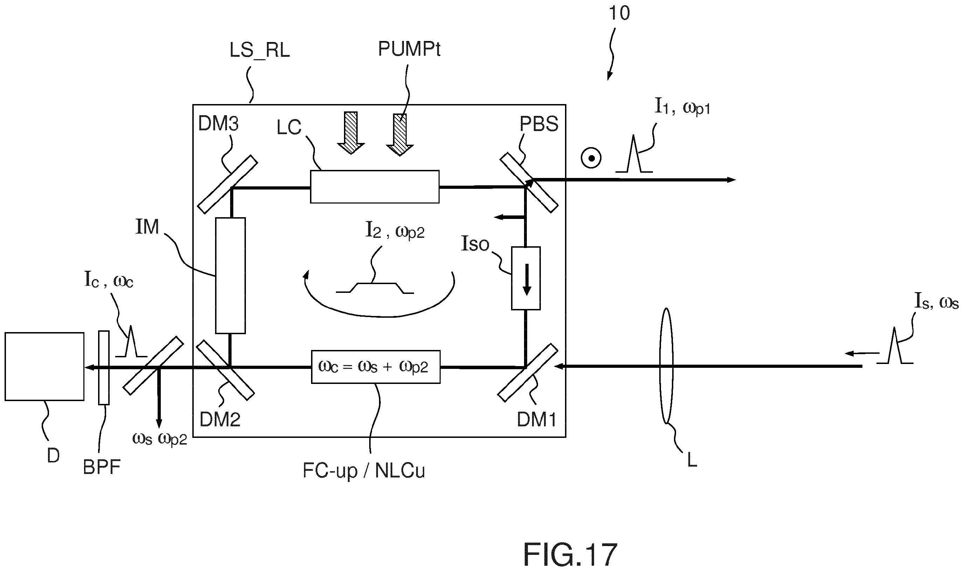

Dans un mode plus avantageux, la cellule IM est en outre configurée de sorte que la première impulsion I1 et la deuxième impulsion I2 présentent deux polarisations orthogonales. Un exemple plus détaillé du LIDAR 10 selon ce mode est illustré figures 16 et 17.

Le polariseur n'est alors plus intra cavité mais sous la forme du miroir MS, qui devient un séparateur de polarisation PBS (Polarizing Beam Splitter), configuré pour transmettre la polarisation correspondant à la première impulsion I1, permettant l'extraction de I1 de la cavité laser, et pour réfléchir la polarisation correspondant à la deuxième impulsion I2. La génération de I1 intracavité est toujours réalisée par Qswitch, c'est-à-dire en commutant les pertes de la cavité, mais l'extraction de I1 hors de la cavité est réalisé par commutation de la polarisation, à l'aide de la même cellule de Pockels . Un tel mode de fonctionnement est dénommé en anglais «cavity dumping ». Un premier avantage de ce mode de fonctionnement est qu'il est possible d'extraire toute l'énergie circulant dans la cavité sur un temps correspondant à un aller-retour dans la cavité, indépendamment du temps de création de l'impulsion lumineuse, à condition d'avoir un modulateur suffisamment rapide. On peut ainsi générer des impulsions plus courtes que dans le mode précédent. L'autre avantage est que l'impulsion I2, qui est générée avec une polarisation orthogonale (pertes minimales dans la cavité), ne sort pas de la cavité et on bénéficie donc d'une surtension optimale pour l'opération d'up-conversion.

La figure 16 illustre le cas pour lequel les impulsions I1 et I2 présentent une même fréquence $\omega_p$. Dans ce cas une down conversion est nécessaire. Par exemple le cristal laser LC est un Nd :YAG à 1,064 $\mu$m, avec une down conversion extra cavité vers 1,5 $\mu$m.

La figure 17 illustre le cas pour lequel les impulsions I1 et I2 présentent deux fréquences différentes. On peut alors se passer de l'étape de conversion NLCd.

Par exemple, le cristal YAG ($Y_3Al_5O_{12}$) dopé Er a des raies d'émission avec des sections efficaces différentes telles que l'émission sur une de ces raies dépend de l'inversion de population initiale. Avec ce matériau les 2 raies principales sont 1645 nm et 1617 nm. Il est connu que le laser aura tendance à partir sur 1645 nm en continu mais que suite à une forte inversion de population (Q-switch) c'est la raie à 1617 nm qui oscillera. Ainsi avec le fonctionnement décrit en mode « cavity dumping » l'impulsion I1 est naturellement à 1617 nm et l'impulsion I2 à 1645 nm. Ce cas Er :YAG est particulièrement intéressant car on est à une longueur d'onde « eye-safe » et que le signal converti à 815 nm est détectable avec une technologie Si

En fait, ce principe fonctionne pareillement avec d'autres matrices que YAG et d'une façon plus générale pour les transitions laser opérant entre le niveau fondamental et le premier niveau excité.

On peut donc réaliser le même schéma avec la transition vers 1-1,1 $\mu$m de Yb, 1,9-2 $\mu$m de Tm, ou encore 2,05-2,15 $\mu$m de l'ion Ho.

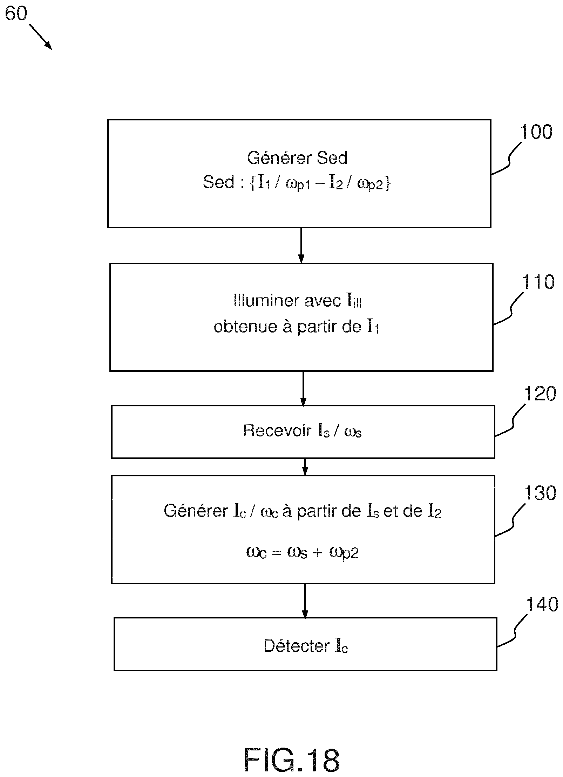

Selon un autre aspect l'invention concerne un procédé 60 de détection d'une cible de type LIDAR illustré figure 18. Le procédé 60 comprend une première étape 100 consistant à générer périodiquement, à partir d'une source laser unique, un signal d'émission-détection Sed, le signal d'émission-détection comprenant une première impulsion I1 présentant une première fréquence $\omega_{p1}$ puis une deuxième impulsion I2 présentant une deuxième fréquence $\omega_{p2}$ et étant séparée de la première impulsion d'un temps de séparation $\Delta\tau$.

Puis dans une deuxième étape 110 on illumine une cible avec une impulsion d'illumination I$_{ill}$ obtenue à partir de la première impulsion I1.

Ensuite on reçoit dans une étape 120 une impulsion signal Is issue d'une réflexion de l'impulsion d'illumination sur la cible, les impulsions d'illumination et signal présentant une même fréquence signal $\omega_s$.

Dans une étape 130 on génère une impulsion convertie Ic à partir de l'impulsion signal Is et de la deuxième impulsion I2 par un procédé non linéaire de sommation de fréquence, l'impulsion convertie présentant une

fréquence convertie $\omega_c$ égale à la somme de la fréquence signal $\omega_s$ et de la deuxième fréquence $\omega_{p2}$.

Enfin dans une étape 140 on détecte l'impulsion convertie Ic.

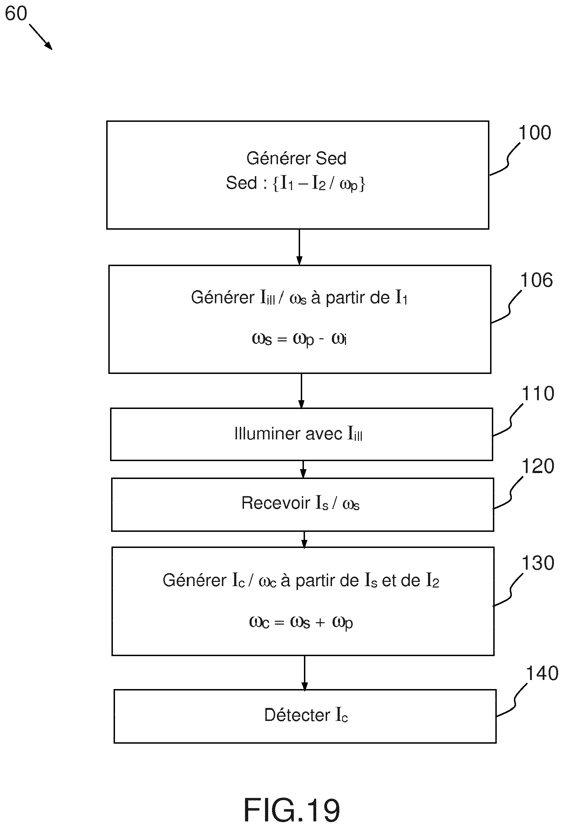

Selon une variante du procédé illustrée figure 19, la première fréquence $\omega_{p1}$ et la deuxième fréquence $\omega_{p2}$ présentent une même valeur dénommée fréquence de pompe $\omega_p$. Le procédé 60 comprend alors une étape additionnelle 106 consistant à générer l'impulsion d'illumination I$_{ill}$ à la fréquence signal $\omega_s$ à partir de la première impulsion I1 par un procédé non linéaire de conversion de fréquence, la fréquence signal $\omega_s$ obtenue étant égale à la fréquence de pompe moins une fréquence intermédiaire $\omega_i$.

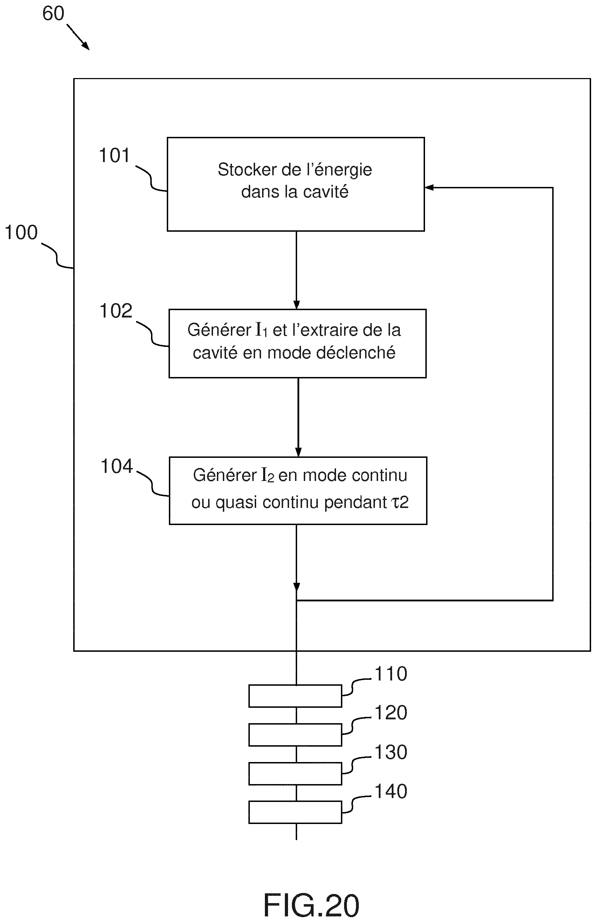

Selon un mode de mise en oeuvre du procédé 60 illustré figure 20, l'étape 100 de génération du signal d'émission détection et l'étape 130 de génération de l'impulsion convertie sont réalisées par une même source laser présentant une cavité laser en anneau.

L'étape 130 de génération de l'impulsion convertie s'effectue alors intracavité avec un cristal non linéaire disposé dans la cavité laser.

L'étape 100 de génération du signal Sed d'émission-détection s'effectue avec une cellule électro-optique IM qui module l'intensité à l'intérieur de la cavité en ajustant le niveau des pertes, permettant au laser de fonctionner selon des modes différents.

La génération de Sed s'effectue en plusieurs sous étapes.

Tout d'abord dans l'étape 101 on stocke de l'énergie dans la cavité, la cellule électro-optique étant configurée pour empêcher le laser de fonctionner (pertes élevées).

Puis dans une étape 102 on génère et extrait de la cavité la première impulsion I1 en commutant les pertes de la cavité à un niveau très bas par le biais de la cellule IM, le laser fonctionnant en mode déclenché.

Dans une étape 104 on génère l'impulsion I2 en laissant le laser osciller en mode continu ou quasi continu pendant un temps $\tau2$.

Enfin la cellule électro-optique est à nouveau configurée pour empêcher le laser de laser, et on reboucle à l'étape 101 de stockage, de manière à entamer un nouveau cycle de génération du signal Sed.

Préférentiellement la cellule électro-optique IM modulant les pertes dans la cavité est un modulateur de phase couplé à un polariseur, dénommé cellule de Pockels.

Selon une première option le mode déclenché est un « Q-switch simple» tel que défini plus haut, pour lequel la génération et l'extraction de l'impulsion I1 s'effectue automatiquement par Q switch.

Si on cherche à avoir un temps de séparation $\Delta\tau$ court pour pouvoir couvrir une grande région de l'espace, typiquement inférieur au temps te d'établissement du mode d'oscillation laser continu, alors à la fin de l'étape 102 on laisse le niveau de pertes au plus bas jusqu'à ce que le laser oscille en mode continu jusqu'à un temps

$\Delta\tau + \tau 2$ .

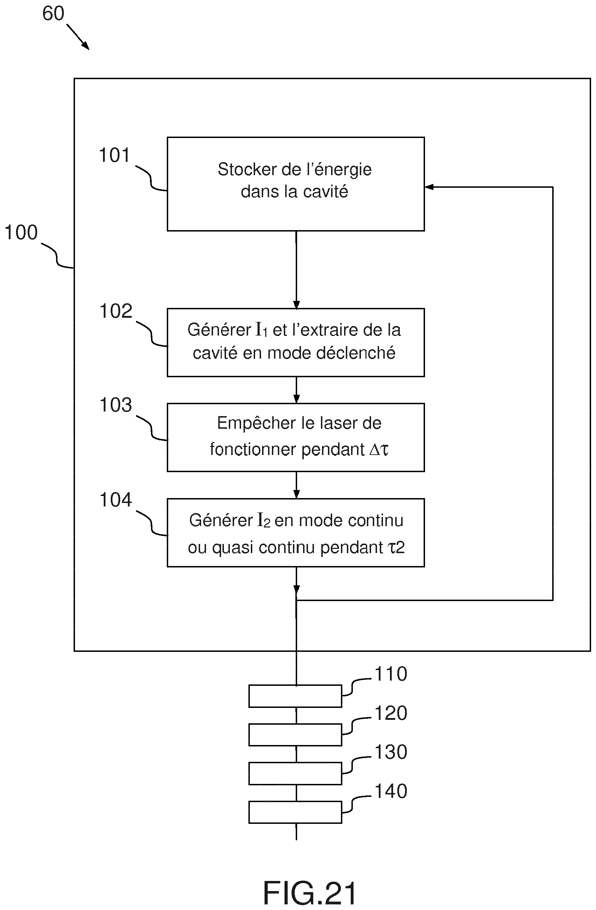

Si au contraire on cherche à sonder une région de l'espace éloignée et restreinte ($\Delta\tau > tc$) il convient de commuter à nouveau les pertes pour empêcher le laser de fonctionner et emmagasiner de l'énergie pendant un temps proche de $\Delta\tau$ avant de commuter les pertes pour l'émission de l'impulsion I2 pendant le temps $\tau 2$. Le procédé 60 selon l'invention comprend alors une étape additionnelle 103 entre l'étape 102 de génération de I1 et l'étape 104 de génération de I2 consistant à empêcher le laser de fonctionner pendant $\Delta\tau$ tel qu'illustré figure 21.

Selon une deuxième option le mode déclenché est un « cavity dumping » tel que défini plus haut. Le polariseur est ici un séparateur de polarisation PBS qui constitue un des miroirs de la cavité laser.

A l'étape 101 la polarisation imposée par la cellule de Pockels est parallèle à la polarisation transmise par le PBS. Les pertes sont maximales, le laser ne peut pas fonctionner, et le cristal laser pompé stocke de l'énergie.

Dans cette deuxième option l'étape 102 comprend deux sous étapes, une première sous étape 102a de génération de l'impulsion I1 intracavité et une deuxième sous étape 102b d'extraction de l'impulsion I1.

Dans la première sous étape 102a la cellule de Pockels est subitement commutée pour minimiser les pertes en alignant la polarisation parallèlement à celle pour laquelle le PBS est fortement réfléchissant, ce qui permet la création par émission stimulée d'une impulsion géante intra cavité, correspondant à I1.

Lorsque la puissance crête de l'impulsion atteint son maximum, dans une deuxième sous étape 102b la polarisation est tournée de 90° à l'aide de la cellule de Pockels, cette polarisation étant transmise par le PBS, et l'impulsion est extraite de la cavité via le PBS.

A l'étape 104, la cellule de Pockels est alors de nouveau activée pour minimiser les pertes et un signal laser continu s'établit intra cavité et forme la deuxième impulsion, pendant un temps $\tau 2$.

De même que précédemment une variante consiste à, préalablement à la génération de I2, maximiser les pertes pendant un temps $\Delta\tau$ (étape 103) si celui-ci est grand devant le temps te d'établissement de l'oscillation continue. Puis les pertes sont de nouveau maximisées pour re-pomper le cristal laser et un nouveau cycle peut commencer.

Selon un mode de réalisation, le procédé 60 réalise un balayage fin de l'espace entre une distance minimum dmin et une distance maximum dmax avec une série de N signaux Sed présentant une deuxième impulsion I2' plus courte que l'impulsion I2 permettant de couvrir par sa durée l'espace entre dmin et dmax. Dans ce mode de réalisation la deuxième impulsion I2' est plus courte et est séparée d'un temps de séparation variable, de manière à simuler une impulsion I2 plus longue sur un cycle de N signaux Sed.

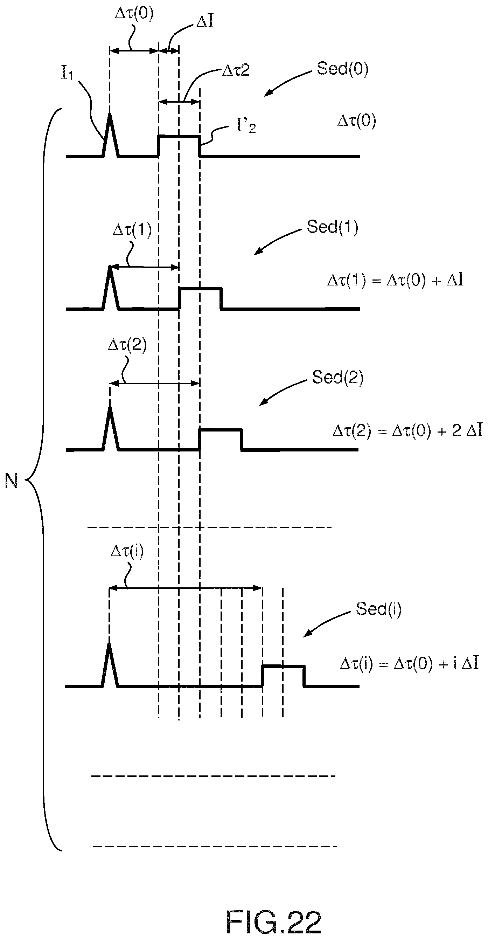

Pour cela l'étape 100 de génération du signal d'émission réception consiste à générer périodiquement un ensemble de N signaux d'émission réception Sed(i), i indice variant de 0 à N-1, dont le temps de séparation $\Delta\tau(i)$ varie de manière incrémentale d'un signal d'émission réception au suivant, tel qu'illustré figure 22.

Soit $\Delta\tau 2'$ la durée de I2' pour ce mode de réalisation.

Soit $\Delta\tau 2$ la durée de l'impulsion I2 permettant de couvrir par sa durée l'espace entre dmin et dmax.

On a $\Delta\tau 2' < \Delta\tau 2$, et préférentiellement $\Delta\tau 2' = \Delta\tau 2 / N$

On a :

$$\Delta\tau(i) = \Delta\tau(0) + i\ \Delta I$$

et

$$\Delta\tau(i+1) - \Delta\tau(i) = \Delta I$$

$\Delta I$ correspond à la variation du temps de séparation entre deux signaux d'émission réception consécutifs.

Préférentiellement $\Delta\tau 2' = \Delta I$.

Rappelons que pour couvrir une distance allant de dmin = 1 km à dmax = 100 km de la source, la deuxième impulsion I2 est générée $\Delta\tau = 6,6\ \mu s$ après la première impulsion I1 et a une durée $\Delta\tau 2 = 653,4\ \mu s$.

Pour couvrir ce même espace 1-100 km on peut par exemple réaliser un cycle de N=10 signaux Sed ou doublets, avec une deuxième impulsion I2' de durée $\Delta\tau 2' = 65\mu s$, avec un délai par rapport à la première impulsion décalé de $\Delta I = 65\ \mu s$ d'un doublet à l'autre.

**Revendications**

1. Système LIDAR (10) configuré pour illuminer une cible avec une impulsion d'illumination ($I_{ill}$) et pour récupérer une impulsion signal (Is) issue d'une réflexion de l'impulsion d'illumination sur la cible, les impulsions d'illumination et signal présentant une même fréquence signal ($\omega_s$),

le système LIDAR comprenant :

- une source laser (LS) unique configurée pour générer un signal d'émissiondétection (Sed) avec une fréquence de répétition f, ledit signal d'émissiondétection comprenant une première impulsion (I1) destinée à générer l'impulsion d'illumination et présentant une première fréquence ($\omega_{p1}$) puis une deuxième impulsion (I2) séparée temporellement de la première impulsion d'un temps de séparation ($\Delta\tau$) et présentant une deuxième fréquence ($\omega_{p2}$),

- un premier dispositif de conversion de fréquence (FC-up) configuré pour générer une impulsion convertie (Ic) à partir de l'impulsion signal (Is) et de la deuxième impulsion (I2) par un procédé non linéaire de sommation de fréquence, l'impulsion convertie présentant une fréquence convertie ($\omega_c$) égale à la somme de la fréquence signal ($\omega_s$) et de la deuxième fréquence ($\omega_{p2}$).

2. Système LIDAR selon la revendication 1 dans lequel la première impulsion présente une première durée ($\tau$1) et la deuxième impulsion présente une deuxième durée ($\tau$2) supérieure à la première durée ($\tau$1), et dans lequel le temps de séparation ($\Delta\tau$) est déterminé à partir d'une distance minimale (dmin) de détection de la cible souhaitée et la deuxième durée ($\tau$2) est déterminée à partir d'une distance maximale (dmax) de détection de la cible souhaitée.

3. Système LIDAR selon les revendications 1 ou 2 dans lequel le premier dispositif de conversion de fréquence (FC-up) comprend un premier cristal non linéaire (NLCu).

4. Système LIDAR selon la revendication 3 dans lequel le premier cristal non linéaire (NLCu) est disposé dans une cavité résonnant à la deuxième fréquence ($\omega_{p2}$).

5. Système LIDAR selon les revendications précédentes dans lequel la source laser (LS) est configurée pour que la première fréquence ($\omega_{p1}$) et la deuxième fréquence ($\omega_{p2}$) présentent une même valeur dénommée fréquence de pompe ($\omega_p$), le système LIDAR comprenant en outre un deuxième dispositif de conversion de fréquence (FC-down) configuré pour générer l'impulsion d'illumination (I$_{ill}$) à la fréquence signal ($\omega_s$) à partir de la première impulsion (I1) à la fréquence de pompe ($\omega_p$) par un procédé non linéaire de soustraction de fréquence, la fréquence signal ($\omega_s$) obtenue étant égale à la fréquence de pompe ($\omega_p$) moins une fréquence intermédiaire ($\omega_i$).

6. Système LIDAR selon la revendication 5 dans lequel le deuxième dispositif de conversion de fréquence (FC-down) comprend un deuxième cristal non linéaire (NLCd).

7. Système LIDAR selon la revendication 6 dans lequel le deuxième dispositif de conversion de fréquence comprend en outre une diode laser signal (DLs) configurée pour illuminer le deuxième cristal non linéaire (NLCd) avec un faisceau présentant la fréquence signal de sorte que ce faisceau soit amplifié dans le premier cristal non linéaire au fur et à mesure de sa propagation.

8. Système LIDAR selon l'une des revendications 6 ou 7 dans lequel le deuxième cristal non linéaire (NLCd) est disposé dans une cavité résonnant à la fréquence signal ($\omega_s$) et/ou à la fréquence intermédiaire ($\omega_i$) et forme un oscillateur paramétrique (OPO).

9. Système LIDAR selon l'une des revendications 1 à 3 dans lequel la source laser (LS) est configurée pour que la première fréquence ($\omega_{p1}$) et la deuxième fréquence ($\omega_{p2}$) présentent une valeur différente, et dans lequel la fréquence signal ($\omega_s$) est égale à la première fréquence.

10. Système LIDAR selon l'une des revendications précédentes dans lequel la source laser (LS) et le premier dispositif de conversion de fréquence (FC-up) sont deux éléments distincts, le système LIDAR comprenant en outre un séparateur (S) configuré pour séparer spatialement la première impulsion de la deuxième impulsion, afin que la deuxième impulsion puisse être injectée dans le premier dispositif de conversion de fréquence (FC-up).

11. Système LIDAR selon la revendication précédente dans lequel la source laser (LS) est un système comprenant un oscillateur et au moins un amplificateur à fibre.

12. Système LIDAR selon la revendication précédente dans lequel l'oscillateur comprend au moins une diode laser (DL, DL1, DL2) configurée pour réaliser un profil temporel de la première et/ou de la deuxième impulsion par modulation directe du courant injecté dans ladite diode laser.

13. Système LIDAR selon l'une des revendications 1 à 9 dans lequel la source laser (LS) est un laser en anneau (RG) présentant une cavité laser et comprenant une cellule électro-optique (IM) pour moduler l'intensité à l'intérieur de la cavité laser, et dans lequel le premier cristal non-linéaire (NLCu) est disposé dans la cavité laser dudit laser en anneau.

14. Système LIDAR selon la revendication précédente dans lequel ladite cellule (IM) est en outre configurée de sorte que la première impulsion (I1) et la deuxième impulsion (I2) présentent deux polarisations orthogonales, un miroir de la cavité laser étant un séparateur de polarisation (PBS) configuré pour transmettre la polarisation correspondant à la première impulsion, permettant l'extraction de ladite première impulsion de la cavité laser.

15. Procédé (60) de détection d'une cible de type LIDAR comprenant les étapes consistant à :

    - générer (100) périodiquement à partir d'une source laser unique, un signal d'émission-détection (Sed), le signal d'émission-détection comprenant une première impulsion (I1) pré-

sentant une première fréquence ($\omega_{p1}$) puis une deuxième impulsion (I2) présentant une deuxième fréquence ($\omega_{p2}$) et étant séparée de la première impulsion d'un temps de séparation ($\Delta\tau$) et,

- illuminer (110) une cible avec une impulsion d'illumination ($I_{ill}$) obtenue à partir de la première impulsion (I1),
- recevoir (120) une impulsion signal (Is) issue d'une réflexion de l'impulsion d'illumination sur la cible, les impulsions d'illumination et signal présentant une même fréquence signal ($\omega_s$),
- générer (130) une impulsion convertie (Ic) à partir de l'impulsion signal (Is) et de la deuxième impulsion (I2) par un procédé non linéaire de sommation de fréquence, l'impulsion convertie présentant une fréquence convertie ($\omega_c$) égale à la somme de la fréquence signal ($\omega_s$) et de la deuxième fréquence ($\omega_{p2}$),
- détecter (140) l'impulsion convertie.

16. Procédé (60) selon la revendication précédente dans lequel la première fréquence ($\omega_{p1}$) et la deuxième fréquence ($\omega_{p1}$) présentent une même valeur dénommée fréquence de pompe ($\omega_{p2}$), le procédé comprenant en outre une étape (106) consistant à générer l'impulsion d'illumination ($I_{ill}$) à la fréquence signal ($\omega_s$) à partir de la première impulsion (I1) par un procédé non linéaire de conversion de fréquence, la fréquence signal ($\omega_s$) obtenue étant égale à la fréquence de pompe ($\omega_p$) moins une fréquence intermédiaire ($\omega_i$).

17. Procédé selon l'une des revendications 15 ou 16 dans lequel l'étape de génération du signal d'émission-détection et l'étape de génération de l'impulsion convertie sont réalisées par une même source laser présentant une cavité laser en anneau,

l'étape de génération du signal d'émission-détection (100) s'effectuant avec une cellule électro-optique (IM) modulant l'intensité à l'intérieur de la cavité et l'étape de génération de l'impulsion convertie (130) s'effectuant dans la cavité laser avec un cristal non linéaire (NLCu) disposé intracavité,

et dans lequel l'étape (100) de génération du signal d'émission-détection comprend les sous étapes consistant à :

- stocker (101) de l'énergie dans la cavité, la cellule électro-optique étant configurée pour empêcher le laser de laser,
- générer et extraire de la cavité (102) la première impulsion (I1), la cellule électro-optique étant configurée pour que le laser fonctionne en mode déclenché,
- générer (104) la deuxième impulsion (I2), la cellule électro-optique étant configurée pour que le laser fonctionne en mode continu ou quasi-continu pendant la durée souhaitée de la deuxième impulsion,

- reboucler à l'étape de stockage, de manière à entamer un nouveau cycle de génération du signal d'émission.

18. Procédé selon la revendication 17 comprenant en outre, entre l'étape (102) de génération et d'extraction de la première impulsion et l'étape (104) de génération de la deuxième impulsion, une étape (103) consistant à empêcher le laser de fonctionner pendant un temps correspondant au temps de séparation.

19. Procédé selon l'une des revendications 17 ou 18 dans lequel l'étape (102) de génération et d'extraction de la première impulsion (I1) s'effectue à l'aide d'un séparateur de polarisation (PBS) constituant un des miroirs de la cavité laser, ladite étape comprenant une première sous étape (102a ) de génération de l'impulsion I1 intracavité et une deuxième sous étape (102b) d'extraction de l'impulsion I1.

20. Procédé selon l'une des revendications 15 à 17 dans lequel l'étape de génération du signal d'émission réception consiste à générer périodiquement un ensemble de N signaux d'émission réception dont le temps de séparation ($\Delta\tau i$) varie de manière incrémentale d'un signal d'émission réception au suivant.

**Patentansprüche**

1. LIDAR-System (10), das zum Beleuchten eines Ziels mit einem Beleuchtungsimpuls ($I_{ill}$) und zum Zurückgewinnen eines Signalimpulses (Is) konfiguriert ist, der von einer Reflexion des Beleuchtungsimpulses am Ziel stammt, wobei die Beleuchtungs- und Signalimpulse die gleiche Signalfrequenz ($\omega_s$) aufweisen, wobei das LIDAR-System Folgendes umfasst:

- eine einzelne Laserquelle (LS), die zum Erzeugen eines Detektionssendesignals (Sed) mit einer Wiederholungsfrequenz f konfiguriert ist, wobei das Detektionssendesignal einen zum Erzeugen des Beleuchtungsimpulses bestimmten ersten Impuls (I1) mit einer ersten Frequenz ($\omega_{p1}$) und dann einen zweiten Impuls (I2) umfasst, der zeitlich vom ersten Impuls um eine Trennzeit ($\Delta\tau$) getrennt ist und eine zweite Frequenz ($\omega_{p2}$) aufweist,
- eine erste Frequenzumwandlungsvorrichtung (FC-up), die zum Erzeugen eines umgewandelten Impulses (Ic) aus dem Signalimpuls (Is) und dem zweiten Impuls (I2) durch ein nichtlineares Frequenzsummationsverfahren konfiguriert ist, wobei der umgewandelte Impuls eine umgewandelte Frequenz ($\omega_c$) aufweist, die gleich der Summe aus der Signalfrequenz ($\omega_s$) und der zweiten Frequenz ($\omega_{p2}$) ist.

**2.** LIDAR-System nach Anspruch 1, wobei der erste Impuls eine erste Dauer ($\tau 1$) und der zweite Impuls eine zweite Dauer ($\tau 2$) aufweist, die größer als die erste Dauer ($\tau 1$) ist, und wobei die Trennzeit ($\Delta\tau$) aus einer minimalen Detektionsdistanz (dmin) des gewünschten Ziels bestimmt wird und die zweite Dauer ($\tau 2$) aus einer maximalen Detektionsdistanz (dmax) des gewünschten Ziels bestimmt wird.

**3.** LIDAR-System nach Anspruch 1 oder 2, wobei die erste Frequenzumwandlungsvorrichtung (FC-up) einen ersten nichtlinearen Kristall (NLCu) umfasst.

**4.** LIDAR-System nach Anspruch 3, wobei der erste nichtlineare Kristall (NLCu) in einem Hohlraum angeordnet ist, der bei der zweiten Frequenz ($\omega_{p2}$) schwingt.

**5.** LIDAR-System nach den vorhergehenden Ansprüchen, wobei die Laserquelle (LS) so konfiguriert ist, dass die erste Frequenz ($\omega_{p1}$) und die zweite Frequenz ($\omega_{p2}$) einen gleichen Wert aufweisen, der als Pumpfrequenz ($\omega_p$) bezeichnet wird, wobei das LIDAR-System ferner eine zweite Frequenzumwandlungsvorrichtung (FC-down) umfasst, die zum Erzeugen des Beleuchtungspulses ($I_{ill}$) mit der Signalfrequenz ($\omega_s$) aus dem ersten Impuls (I1) mit der Pumpfrequenz ($\omega_p$) durch ein nichtlineares Frequenzsubtraktionsverfahren konfiguriert ist, wobei die erhaltene Signalfrequenz ($\omega_s$) gleich der Pumpfrequenz ($\omega_p$) minus einer Zwischenfrequenz ($\omega_i$) ist.

**6.** LIDAR-System nach Anspruch 5, wobei die zweite Frequenzumwandlungsvorrichtung (FC-down) einen zweiten nichtlinearen Kristall (NLCd) umfasst.

**7.** LIDAR-System nach Anspruch 6, wobei die zweite Frequenzumwandlungsvorrichtung ferner eine Signallaserdiode (DLs) umfasst, die zum Beleuchten des zweiten nichtlinearen Kristalls (NLCd) mit einem Strahl konfiguriert ist, der die Signalfrequenz aufweist, so dass dieser Strahl im ersten nichtlinearen Kristall im Laufe seiner Ausbreitung verstärkt wird.

**8.** LIDAR-System nach einem vom Anspruch 6 oder 7, wobei der zweite nichtlineare Kristall (NLCd) in einem Hohlraum angeordnet ist, der bei der Signalfrequenz ($\omega_s$) und/oder der Zwischenfrequenz ($\omega_i$) resoniert und einen parametrischen Oszillator (OPO) bildet.

**9.** LIDAR-System nach einem der Ansprüche 1 bis 3, wobei die Laserquelle (LS) so konfiguriert ist, dass die erste Frequenz ($\omega_{p1}$) und die zweite Frequenz ($\omega_{p2}$) einen unterschiedlichen Wert aufweisen, und wobei die Signalfrequenz ($\omega_s$) gleich der ersten Frequenz ist.

**10.** LIDAR-System nach einem der vorhergehenden Ansprüche, wobei die Laserquelle (LS) und die erste Frequenzumwandlungsvorrichtung (FC-up) zwei getrennte Elemente sind, wobei das LIDAR-System ferner einen Separator (S) umfasst, der zum räumlichen Trennen des ersten Impulses vom zweiten Impuls konfiguriert ist, so dass der zweite Impuls in die erste Frequenzumwandlungsvorrichtung (FC-up) eingespeist werden kann.

**11.** LIDAR-System nach dem vorhergehenden Anspruch, wobei die Laserquelle (LS) ein System ist, das einen Oszillator und mindestens einen Faserverstärker umfasst.

**12.** LIDAR-System nach dem vorhergehenden Anspruch, wobei der Oszillator mindestens eine Laserdiode (DL, DL1, DL2) umfasst, die zum Erzeugen eines Zeitprofils des ersten und/oder des zweiten Impulses durch direkte Modulation des in die Laserdiode eingespeisten Stroms konfiguriert ist.

**13.** LIDAR-System nach einem der Ansprüche 1 bis 9, wobei die Laserquelle (LS) ein Ringlaser (RG) ist, der einen Laserhohlraum aufweist und eine elektrooptische Zelle (IM) zum Modulieren der Intensität innerhalb des Laserhohlraums umfasst, und wobei der erste nichtlineare Kristall (NLCu) im Laserhohlraum des Ringlasers angeordnet ist.

**14.** LIDAR-System nach dem vorhergehenden Anspruch, wobei die Zelle (IM) ferner so konfiguriert ist, dass der erste Impuls (I1) und der zweite Impuls (I2) zwei orthogonale Polarisationen aufweisen, wobei ein Spiegel des Laserhohlraums ein Polarisationsseparator (PBS) ist, der zum Übertragen der Polarisation entsprechend dem ersten Impuls konfiguriert ist, wodurch der erste Impuls aus dem Laserhohlraum extrahiert werden kann.

**15.** Verfahren (60) zum Detektieren eines LIDAR-Ziels, das die folgenden Schritte umfasst:

- periodisches Erzeugen (100) eines Sendedetektionssignals (Sed) aus einer einzigen Laserquelle, wobei das Sendedetektionssignal einen ersten Impuls (I1) mit einer ersten Frequenz ($\omega_{p1}$) und dann einen zweiten Impuls (I2) umfasst, der eine zweite Frequenz ($\omega_{p2}$) aufweist und vom ersten Impuls um eine Trennzeit ($\Delta\tau$) getrennt ist, und

- Beleuchten (110) eines Ziels mit einem Beleuchtungsimpuls ($I_{ill}$), der aus dem ersten Impuls (I1) erhalten wurde,
- Empfangen (120) eines Signalimpulses (Is), der aus einer Reflexion des Beleuchtungsimpulses am Ziel stammt, wobei die Beleuchtungs- und Signalimpulse die gleiche Signalfrequenz ($\omega_s$) aufweisen,
- Erzeugen eines umgewandelten Impulses (Ic) auf der Basis des Signalimpulses (Is) und des zweiten Impulses (I2) mit einem nichtlinearen Frequenzsummationsverfahren, wobei der umgewandelte Impuls eine umgewandelte Frequenz ($\omega_c$) aufweist, die gleich der Summe aus der Signalfrequenz ($\omega_s$) und der zweiten Frequenz ($\omega_{p2}$) ist,
- Detektieren (140) des umgewandelten Impulses.

16. Verfahren (60) nach dem vorhergehenden Anspruch, wobei die erste Frequenz ($\omega_{p1}$) und die zweite Frequenz ($\omega_{p1}$) denselben Wert aufweisen, der als Pumpfrequenz ($\omega_{p2}$) bezeichnet wird, wobei das Verfahren ferner einen Schritt (106) des Erzeugens des Beleuchtungsimpulses ($I_{ill}$) mit der Signalfrequenz ($\omega_s$) aus dem ersten Impuls (I1) mit einem nichtlinearen Frequenzumwandlungsverfahren umfasst, wobei die erhaltene Signalfrequenz ($\omega_s$) gleich der Pumpfrequenz ($\omega_p$) minus einer Zwischenfrequenz ($\omega_i$) ist.

17. Verfahren nach einem vom Anspruch 15 oder 16, wobei der Schritt des Erzeugens des Sendedetektionssignals und der Schritt des Erzeugens des umgewandelten Impulses von einer einzigen Laserquelle mit einem ringförmigen Laserhohlraum durchgeführt werden,

wobei der Schritt (100) des Erzeugens des Sendedetektionssignals mit einer elektrooptischen Zelle (IM) durchgeführt wird, die die Intensität innerhalb des Hohlraums moduliert, und der Schritt (130) des Erzeugens des umgewandelten Impulses im Laserhohlraum mit einem nichtlinearen Kristall (NLCu) durchgeführt wird, der innerhalb des Hohlraums angeordnet ist, und wobei der Schritt (100) des Erzeugens des Sendedetektionssignals die folgenden Teilschritte umfasst:

- Speichern (101) von Energie in dem Hohlraum, wobei die elektrooptische Zelle zum Hindern des Lasers am Lasern konfiguriert ist,
- Erzeugen und Extrahieren des ersten Impulses (I1) aus dem Hohlraum (102), wobei die elektrooptische Zelle so konfiguriert ist, dass der Laser im Auslösemodus arbeitet,

- Erzeugen (104) des zweiten Impulses (I2), wobei die elektrooptische Zelle so konfiguriert ist, dass der Laser während der gewünschten Dauer des zweiten Impulses im kontinuierlichen oder quasi-kontinuierlichen Modus arbeitet,
- Zurückschleifen zum Speicherschritt, um einen neuen Sendesignal-Erzeugungszyklus zu beginnen.

18. Verfahren nach Anspruch 17, das zwischen dem Schritt (102) des Erzeugens und Extrahierens des ersten Impulses und dem Schritt (104) des Erzeugens des zweiten Impulses ferner einen Schritt (103) umfasst, in dem der Laser für eine Zeit entsprechend der Trennzeit am Betrieb gehindert wird.

19. Verfahren nach einem vom Anspruch 17 oder 18, wobei der Schritt (102) des Erzeugens und Extrahierens des ersten Impulses (I1) mit Hilfe eines Polarisationsseparators (PBS) erfolgt, der einen der Spiegel des Laserhohlraums bildet, wobei der Schritt einen ersten Teilschritt (102a) des Erzeugens des intrakavitären Impulses I1 und einen zweiten Teilschritt (102b) des Extrahierens des Impulses I1 umfasst.

20. Verfahren nach einem der Ansprüche 15 bis 17, wobei der Schritt des Erzeugens des Sende-Empfangs-Signals darin besteht, periodisch einen Satz von N Sende-Empfangs-Signalen zu erzeugen, deren Trennzeit ($\Delta\tau i$) von einem Sende-EmpfangsSignal zum nächsten inkremental variiert.

**Claims**

1. A LIDAR system (10) which is configured to illuminate a target with an illumination pulse ($I_{ill}$) and to recover a signal pulse (Is) which is from a reflection of the illumination pulse on the target, the illumination and signal pulses having the same signal frequency ($\omega_s$), the LIDAR system comprising:

- a single laser source (LS) which is configured to generate an emission/detection signal (Sed) with a repetition frequency f, the emission/detection signal comprising a first pulse (I1) which is intended to generate the illumination pulse and having a first frequency ($\omega_{p1}$), then a second pulse (I2) which is separated temporally from the first pulse by a separation time ($\Delta\tau$) and which has a second frequency ($\omega_{p2}$),
- a first frequency conversion device (FC-up) which is configured to generate a converted pulse (Ic) from the signal pulse (Is) and the second pulse (I2) by a non-linear frequency summing method, the converted pulse having a converted frequency ($\omega_c$) which is equal to the sum of the signal frequency ($\omega_s$) and the second frequency ($\omega_{p2}$).

2. The LIDAR system according to claim 1, wherein the first pulse has a first duration ($\tau 1$) and the second pulse has a second duration ($\tau 2$) which is greater than the first duration ($\tau 1$), and wherein the separation time ($\Delta\tau$) is determined from a minimum distance (dmin) for detecting the desired target and the second duration ($\tau 2$) is determined from a maximum distance (dmax) for detecting the desired target.

3. The LIDAR system according to claim 1 or 2, wherein the first frequency conversion device (FC-up) comprises a first non-linear crystal (NLCu).

4. The LIDAR system according to claim 3, wherein the first non-linear crystal (NLCu) is arranged in a cavity which resonates at the second frequency ($\omega_{p2}$).

5. The LIDAR system according to the preceding claims, wherein the laser source (LS) is configured so that the first frequency ($\omega_{p1}$) and the second frequency (($\omega_{p2}$) have the same value which is referred to as the pump frequency ($\omega_p$),
   the LIDAR system further comprising a second frequency conversion device (FC-down) which is configured to generate the illumination pulse ($I_{ill}$) at the signal frequency ($\omega_s$) from the first pulse (I1) at the pump frequency ($\omega_p$) by a non-linear frequency subtraction method, the signal frequency ($\omega_s$) which is obtained being equal to the pump frequency ($\omega_p$) minus an intermediate frequency ($\omega_i$).

6. The LIDAR system according to claim 5, wherein the second frequency conversion device (FC-down) comprises a second non-linear crystal (NLCd).

7. The LIDAR system according to claim 6, wherein the second frequency conversion device further comprises a signal laser diode (DLs) which is configured to illuminate the second non-linear crystal (NLCd) with a beam having the signal frequency so that this beam is amplified in the first non-linear crystal while it is being propagated.

8. The LIDAR system according to one of claim 6 or 7, wherein the second non-linear crystal (NLCd) is arranged in a cavity which resonates at the signal frequency ($\omega_s$) and/or at the intermediate frequency ($\omega_i$) and forms a parametric oscillator (OPO).

9. The LIDAR system according to any one of claims 1 to 3, wherein the laser source (LS) is configured so that the first frequency ($\omega_{p1}$) and the second frequency ($\omega_{p2}$) have a different value, and wherein the signal frequency ($\omega_s$) is equal to the first frequency.

10. The LIDAR system according to any one of the preceding claims, wherein the laser source (LS) and the first frequency conversion device (FC-up) are two different elements, the LIDAR system further comprising a separator (S) which is configured to spatially separate the first pulse from the second pulse so that the second pulse can be injected into the first frequency conversion device (FC-up).

11. The LIDAR system according to the preceding claim, wherein the laser source (LS) is a system comprising an oscillator and at least one fibre amplifier.

12. The LIDAR system according to the preceding claim, wherein the oscillator comprises at least one laser diode (DL, DL1, DL2) which is configured to carry out a time profile of the first and/or second pulse by direct modulation of the current which is injected into the laser diode.

13. The LIDAR system according to any one of claims 1 to 9, wherein the laser source (LS) is a ring laser (RG) having a laser cavity and comprising an electro-optical cell (IM) to modulate the intensity inside the laser cavity, and wherein the first non-linear crystal (NLCu) is arranged in the laser cavity of the ring laser.

14. The LIDAR system according to the preceding claim, wherein the cell (IM) is further configured so that the first pulse (I1) and the second pulse (I2) have two orthogonal polarisations, a mirror of the laser cavity being a polarisation separator (PBS) which is configured to transmit the polarisation corresponding to the first pulse, allowing the extraction of the first pulse from the laser cavity.

15. A method (60) for detecting a target of the LIDAR type, comprising the steps of:

    - periodically generating (100), from a single laser source, an emission/detection signal (Sed), the emission/detection signal comprising a first pulse (I1) which has a first frequency ($\omega_{p1}$), then a second pulse (I2) which has a second frequency ($\omega_{p2}$) and which is separated from the first pulse by a separation time ($\Delta\tau$), and
    - illuminating (110) a target with an illumination pulse ($I_{ill}$) which is obtained from the first pulse (I1),
    - receiving (120) a signal pulse (Is) from a reflection of the illumination pulse on the target, the illumination and signal pulses having the same signal frequency ($\omega_s$),
    - generating (130) a converted pulse (Ic) from the signal pulse (Is) and the second pulse (I2) by a non-linear frequency summing method, the converted pulse having a converted frequency ($\omega_c$) which is equal to the sum of the signal frequency ($\omega_s$) and the second frequency ($\omega_{p2}$),
- detecting (140) the converted pulse.

16. The method (60) according to the preceding claim, wherein the first frequency ($\omega_{p1}$) and the second frequency ($\omega_{p1}$) have the same value which is referred to as the pump frequency ($\omega_{p2}$), the method further comprising a step (106) involving generating the illumination pulse ($I_{ill}$) at the signal frequency ($\omega_s$) from the first pulse (I1) by a non-linear frequency conversion method, the signal frequency ($\omega_s$) which is obtained being equal to the pump frequency ($\omega_p$) minus an intermediate frequency ($\omega_i$).

17. The method according to one of claim 15 or 16, wherein the step of generating the emission/detection signal and the step of generating the converted pulse are carried out by the same laser source having a ring laser cavity,

the step (100) of generating the emission/detection signal being carried out with an electro-optical cell (IM) which modulates the intensity inside the cavity, and the step (130) of generating the converted pulse being carried out in the laser cavity with a non-linear crystal (NLCu) which is arranged within the cavity,
and wherein the step (100) of generating the emission/detection signal comprises the substeps of:

- storing (101) energy in the cavity, the electro-optical cell being configured to prevent the laser from laser,
- generating and extracting the first pulse (I1) from the cavity (102), the electro-optical cell being configured so that the laser operates in triggered mode,
- generating (104) the second pulse (I2), the electro-optical cell being configured so that the laser operates in the continuous or virtually continuous mode for the desired duration of the second pulse,
- looping back to the storage step in order to begin a new cycle of generating the emission signal.

18. The method according to claim 17, further comprising, between the step (102) of generating and extracting the first pulse and the step (104) of generating the second pulse, a step (103) of preventing the laser from operating for a time corresponding to the separation time.

19. The method according to one of claim 17 or 18, wherein the step (102) of generating and extracting the first pulse (I1) is carried out using a polarisation separator (PBS) which constitutes one of the mirrors of the laser cavity, the step comprising a first substep (102a) of generating the intracavity pulse I1 and a second sub-step (102b) of extracting the pulse I1.

20. The method according to any one of claims 15 to 17, wherein the step of generating the emission/reception signal involves periodically generating a set of N emission/reception signals, the separation time ($\Delta\tau i$) of which varies incrementally from one emission/reception signal to the next.

FIG.1

$\omega_p$ $\longrightarrow$ L $\omega_p$ $\longrightarrow$

$\omega_s$ ----> $\omega_s$ ---->

$\omega_c$ $\longrightarrow$

20 $F_c$

## FIG.2

$\omega_p$ $\longrightarrow$ L $\omega_p$ $\longrightarrow$

$\omega_s$ ----> ↑↓↑↓↑↓↑↓ $\omega_s$ ---->

$\omega_c$ $\longrightarrow$

$\Lambda$

30

## FIG.3

FIG.4

FIG.5

FIG.6

$\omega_{p1} = \omega_{p2} = \omega_p$

LS

$I_1$   $I_2$

t

$I_c, \omega_c$

$\omega_s$
$\omega_p$

D

FC-up

$\omega_c = \omega_s + \omega_p$

$I_2, \omega_p$

$I_1, \omega_p$

$\omega_p = \omega_s + \omega_i$
FC-down

$I_s, \omega_s$

T

$I_s, \omega_s$

$\omega_p$

$\omega_i$

$I_s, \omega_s$

FIG.7

FC-down

DLs

$\omega_s$

$I_1, \omega_p$

$I_s, \omega_s$

$\omega_i$   $\omega_p$

NLCd

FIG.8

FIG.9

FIG.10

DL

ωp

A

A

FIG.11

Osc

DL

A

FIG.12a

Osc

DL

A

FIG.12b

DL1

ωp1

Mix

A

A

DL2

ωp2

FIG.14

FIG.13

FIG.15

FIG.16

EP 3 679 395 B1

FIG.17

60

$$\text{Générer Sed}$$
$$\text{Sed} : \{I_1 / \omega_{p1} - I_2 / \omega_{p2}\}$$

100

$$\text{Illuminer avec } I_{ill}$$
$$\text{obtenue à partir de } I_1$$

110

$$\text{Recevoir } I_s / \omega_s$$

120

$$\text{Générer } I_c / \omega_c \text{ à partir de } I_s \text{ et de } I_2$$

$$\omega_c = \omega_s + \omega_{p2}$$

130

$$\text{Détecter } I_c$$

140

FIG.18

60

| Générer Sed<br>Sed : $\{I_1 - I_2 / \omega_p\}$ | 100 |

| Générer $I_{ill} / \omega_s$ à partir de $I_1$<br><br>$\omega_s = \omega_p - \omega_i$ | 106 |

| Illuminer avec $I_{ill}$ | 110 |

| Recevoir $I_s / \omega_s$ | 120 |

| Générer $I_c / \omega_c$ à partir de $I_s$ et de $I_2$<br><br>$\omega_c = \omega_s + \omega_p$ | 130 |

| Détecter $I_c$ | 140 |

FIG.19

60

100

101 Stocker de l'énergie
dans la cavité

102 Générer I₁ et l'extraire de la
cavité en mode déclenché

104 Générer I₂ en mode continu
ou quasi continu pendant τ2

110
120
130
140

# FIG.20

60

100

101 → Stocker de l'énergie dans la cavité

102 → Générer I$_1$ et l'extraire de la cavité en mode déclenché

103 → Empêcher le laser de fonctionner pendant Δτ

104 → Générer I$_2$ en mode continu ou quasi continu pendant τ2

110

120

130

140

## FIG.21

FIG.22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160209498 A

**Littérature non-brevet citée dans la description**

- **HUOT, L. ; MOSELUND, P. M. ; TIDEMAND-LICH-TENBERG, P. ; LEICK, L. ; PEDERSEN, C.** Upconversion imaging using an all-fiber supercontinuum source. *Optics Letters,* 2016, vol. 41, 2466-2469